# EUROPEAN PATENT APPLICATION

(11) **EP 2 890 168 A1**
(43) Date of publication of application: **01.07.2015**
(21) Application number: 12883227.6
(22) Date of filing: 22.08.2012
(51) Int. Cl.: H04W 12/00

(54) **DEEP PACKET INSPECTION PARSING RESULT SHARING/ACQUIRING METHOD, SYSTEM, AND CORRESPONDING DEVICE THEREOF**

(71) Applicant: Huawei Technologies Co., Ltd., Longgang District Shenzhen, Guangdong 518129 (CN)
(72) Inventor: NI, Hui, Shenzhen Guangdong 518129 (CN); HU, Weihua, Shenzhen Guangdong 518129 (CN); TAN, Shiyong, Shenzhen Guangdong 518129 (CN); CAI, Hui, Shenzhen Guangdong 518129 (CN)
(74) Representative: Isarpatent
(86) International application number: PCT/CN2012/080466
(87) International publication number: WO 2014/029088

(57) **Abstract**

The present invention discloses a method and a system for sharing a deep packet inspection parsing result, and a corresponding equipment. The method includes the following steps: a serving network element receives a user packet; performs deep packet inspection on the user packet, to obtain a deep packet inspection parsing result; and sends, to a forwarding network element which sends a request, the deep packet inspection parsing result, to achieve sharing of the deep packet inspection parsing result. A serving network element is provided in the operational network to perform the deep packet inspection on the user packet, and in a case that a forwarding network element sends a request to the serving network element, a deep packet inspection parsing result is sent to the forwarding network element which sends the request, to achieve sharing of the deep packet inspection parsing result, thereby the occupied computing resources of the forwarding network element is reduced and the packet forwarding efficiency of the forwarding network element is improved.

## Description

### TECHNICAL FIELD

This application relates to the field of network technologies and, in particular, to a method and a system for sharing/acquiring a deep packet inspection parsing result, and a corresponding equipment.

### BACKGROUND

The emergence of network broadband technology not only provides telecommunication operators with opportunities but also causes problems that the operational network becomes a pipe gradually. In order to solve this problem, the technology of deep packet inspection (DPI, Deep Packet Inspection) is introduced by technicians to improve the ability of network to sense application information of a user packet, and thus to provide the operator with a basis for achieving service management based on the application information.

Currently, in order to achieve different service management on different network nodes, the operator needs to deploy a corresponding DPI device on each of the network nodes. In some cases, the operator can deploy a plurality of DPI devices in the network, which are respectively used for illegal packet filtering, flow control, flow buffering, flow statistics, attack prevention and etc.

In the prior art, however each DPI device needs to be capable of parsing the user packet individually to acquire the needed application information, since the application layer protocol is getting increasingly complicated, especially after partial services adopt various anti-monitoring techniques, a significant amount of computing resources needs to be occupied when performing deep packet inspection on the user packets, thereby causing significant degradation in a packet forwarding efficiency of the forwarding network element.

### SUMMARY

In order to solve at least part of the problems described above, the present invention provides a method and a system for sharing/acquiring a deep packet inspection parsing result, and a corresponding equipment.

One aspect of the present application provides a method for sharing a deep packet inspection parsing result, and the method includes the following steps: receiving, by a serving network element, a user packet; performing deep packet inspection on the user packet, to obtain a deep packet inspection parsing result; and sending the deep packet inspection parsing result to a forwarding network element which sends a request, to achieve sharing of the deep packet inspection parsing result.

The request is a deep packet inspection subscription request, and the step of sending the deep packet inspection parsing result to the forwarding network element which sends the request, includes: inspecting whether a subscription condition of the forwarding network element is satisfied by information carried by the user packet or the deep packet inspection parsing result, where the subscription condition is incorporated in the deep packet inspection subscription request; and, if the subscription condition of the forwarding network element is satisfied, sending the deep packet inspection parsing result to the forwarding network element whose subscription condition is satisfied.

The subscription condition includes at least one of a data link layer identification, network layer information, transport layer information, application layer information and a packet feature.

After the step of receiving, by the serving network element, the user packet, and before the step of sending the deep packet inspection parsing result to the forwarding network element which sends the deep packet inspection subscription request, the method includes: extracting, from the user packet or the deep packet inspection parsing result, characteristic information to form a packet identification template; the step of sending the deep packet inspection parsing result to the forwarding network element which sends the deep packet inspection subscription request specifically is: sending the deep packet inspection parsing result and the packet identification template to the forwarding network element which sends the deep packet inspection subscription request, for the forwarding network element to obtain, from a data flow, a user packet matching the packet identification template and achieve service control to the user packet.

Before the step of extracting, from the user packet or the deep packet inspection parsing result, the characteristic information to form the packet identification template, the method includes: receiving a packet identification template type; the step of extracting, from the user packet or the deep packet inspection parsing result, the characteristic information to form the packet identification template includes: extracting, according to the packet identification template type and from the user packet or the deep packet inspection parsing result, corresponding characteristic information to form the packet identification template.

The packet identification template includes at least one of a data link layer identification, network layer information, transport layer information, or a packet feature.

The deep packet inspection subscription request is of a user level, of an equipment level or of a service flow level.

The request is a deep packet inspection request, before the step of performing deep packet inspection on the user packet, the method includes: acquiring a deep packet inspection flow identifier formed by characteristic information corresponding to the user packet; the step of performing the deep packet inspection on the user packet, to obtain the deep packet inspection parsing result includes: inspecting whether there is a deep packet inspection parsing result corresponding to the deep packet inspection flow identifier; if no, performing the deep packet inspection on the user packet, to obtain and store the deep packet inspection parsing result.

The step of acquiring the deep packet inspection flow identifier formed by the characteristic information corresponding to the user packet specifically is: extracting, from the user packet, or receiving, from the forwarding network element, the deep packet inspection flow identifier formed by the characteristic information corresponding to the user packet.

Before the step of extracting, from the user packet, the deep packet inspection flow identifier corresponding to the user packet, the method includes: receiving a deep packet inspection flow identifier type; the step of extracting, from the user packet, the characteristic information corresponding to the user packet to form the deep packet inspection flow identifier includes: extracting, according to the deep packet inspection flow identifier type, from the user packet, the characteristic information corresponding to the user packet to form the deep packet inspection flow identifier.

The method includes: if a storage time or an access time of the deep packet inspection parsing result is larger than a threshold time, then deleting, by the serving network element, the deep packet inspection parsing result.

Before the step of receiving, by the serving network element, the user packet, the method includes: performing deep packet inspection service registration for the forwarding network element, and performing service authorization to a successfully registered forwarding network element.

The present application further provides a method for acquiring a deep packet inspection parsing result, including the following steps: sending a request to a serving network element; and receiving a deep packet inspection parsing result which the serving network element performs inspection on the user packet according to the request and then feeds back.

The request is a deep packet inspection subscription request, and the step of sending the request to the serving network element specifically is: sending, to the serving network element the deep packet inspection subscription request carrying a subscription condition.

The subscription condition includes at least one of a data link layer identification, network layer information, transport layer information, application layer information or a packet feature.

Before the step of receiving the deep packet inspection parsing result which the serving network element performs inspection on the user packet according to the request and then feeds back, the method includes: receiving a packet identification template extracted by the serving network element from the user packet or the deep packet inspection parsing result; after the step of receiving the deep packet inspection parsing result which the serving network element performs inspection on the user packet according to the request and then feeds back, the method includes: obtaining a user packet matching the packet identification template from a data flow according to the packet identification template, to achieve service control to the user packet.

Before the step of receiving a packet identification template extracted by the serving network element from the user packet or the deep packet inspection parsing result, the method includes: sending, to the serving network element, a packet identification template type.

The packet identification template includes at least one of a data link layer identification, network layer information, transport layer information, or a packet feature.

The deep packet inspection subscription request is of a user level, of an equipment level or of a service flow level.

Before the step of receiving the deep packet inspection parsing result which the serving network element performs inspection on the user packet according to the request and then feeds back, the method includes: sending, to the serving network element, a deep packet inspection flow identifier type.

After the step of sending, to the serving network element, the deep packet inspection flow identifier type, the method includes: sending, to the serving network element, a deep packet inspection flow identifier.

After the step of receiving the deep packet inspection parsing result which the serving network element performs inspection on the user packet according to the request and then feeds back, the method includes: performing the service control to the user packet according to the deep packet inspection parsing result.

The method further includes: sending, to the serving network element, a deep packet inspection service registration request.

Another aspect of the present application provides a serving network element, including: a request receiving module, configured to receive a user packet; an inspection module, configured to perform deep packet inspection on the user packet, to obtain a deep packet inspection parsing result; a sending module, configured to send the deep packet inspection parsing result to a forwarding network element which sends a request, to achieve sharing of the deep packet inspection parsing result.

The request is a deep packet inspection subscription request, the sending module is further configured to inspect whether a subscription condition of the forwarding network element is satisfied by information carried by the user packet or the deep packet inspection parsing result, and when the subscription condition of the forwarding network element is satisfied, send the deep packet inspection parsing result to the forwarding network element whose subscription condition is satisfied, where the subscription condition is incorporated in the deep packet inspection subscription request.

The subscription condition includes at least one of a data link layer identification, network layer information, transport layer information, application layer information and a packet feature.

The serving network element includes a template extraction module, configured to extract characteristic information from a user packet or a deep packet inspection parsing result to form a packet identification template; the sending module is further configured to send the deep packet inspection parsing result and the packet identification template to the forwarding network element which sends the deep packet inspection subscription request, for the forwarding network element to obtain, from a data flow, a user packet matching the packet identification template and achieve service control to the user packet.

The request receiving module is further configured to receive a packet identification template type; the template extraction module is further configured to extract, according to the packet identification template type, corresponding characteristic information from the user packet or the deep packet inspection parsing result to form the packet identification template.

The packet identification template includes at least one of a data link layer identification, network layer information, transport layer information, or a packet feature.

The deep packet inspection subscription request is of a user level, of an equipment level or of a service flow level.

The request is a deep packet inspection request, the serving network element includes an identification extraction module, configured to acquire a deep packet inspection flow identifier formed by characteristic information corresponding to the user packet; the inspection module is further configured to inspect whether there is a deep packet inspection parsing result corresponding to the deep packet inspection flow identifier, and when there is no corresponding deep packet inspection parsing result, perform the deep packet inspection on the user packet, to obtain and store the deep packet inspection parsing result.

The identification extraction module is further configured to extract, from the user packet, or receive, from the forwarding network element, the deep packet inspection flow identifier formed by the characteristic information corresponding to the user packet.

The request receiving module is further configured to receive a deep packet inspection flow identifier type; the identification extraction module is further configured to extract, according to the deep packet inspection flow identifier type, from the user packet, the characteristic information corresponding to the user packet to form the deep packet inspection flow identifier.

The serving network element includes: a deletion module, configured to, when a storage time or an access time of the deep packet inspection parsing result is larger than a threshold time, delete the deep packet inspection parsing result.

The present application further provides a forwarding network element, including: a sending module, configured to send a request to a serving network element; and a result receiving module, configured to receive a deep packet inspection parsing result which the serving network element performs inspection on a user packet according to the request and then feeds back.

The request is a deep packet inspection subscription request, and the sending module is further configured to send, to the serving network element, the deep packet inspection subscription request carrying a subscription condition.

The subscription condition includes at least one of a data link layer identification, network layer information, transport layer information, application layer information or a packet feature.

The result receiving module is further configured to receive a packet identification template extracted by the serving network element from the user packet or the deep packet inspection parsing result; and the forwarding network element includes a template identification module, configured to obtain, according to the packet identification template and from a data flow, a user packet matching the packet identification template, to achieve service control to the user packet.

The sending module is further configured to send, to the serving network element, a packet identification template type.

The packet identification template includes at least one of a data link layer identification, network layer information, transport layer information, or a packet feature.

The deep packet inspection subscription request is of a user level, of an equipment level or of a service flow level.

The sending module is further configured to send, to the serving network element, a deep packet inspection flow identifier type.

The sending module is further configured to send, to the serving network element, a deep packet inspection flow identifier.

The forwarding network element includes a service control module, and the service control module is configured to perform service control to the user packet according to the deep packet inspection parsing result.

The sending module is further configured to send, to the serving network element, a deep packet inspection service registration request.

Still another aspect of the present application provides a system for sharing a deep packet inspection parsing result, including at least one serving network element and a plurality of forwarding network elements, wherein a data transmission channel is established between the serving network element and each of the forwarding network elements, and the serving network element is any one of the serving network element described above.

The forwarding network element is any one of the forwarding network element described above.

A serving network element is provided in the operational network to perform the deep packet inspection on the user packet, and in a case of sending a request by a forwarding network element to a serving network element, a deep packet inspection parsing result is sent to the forwarding network element which sends the request, to achieve sharing of the deep packet inspection parsing result, so that the occupied computing resources of the forwarding network element are reduced and the packet forwarding efficiency of the forwarding network element is improved.

### BRIEF DESCRIPTION OF DRAWINGS

FIG. 1 is a schematic structural diagram of a system for sharing a deep packet inspection parsing result according to an embodiment of the present application;
FIG. 2 is a flow chart of a method for sharing a deep packet inspection parsing result according to an embodiment of the present application;
FIG. 3 is a flow chart of a method for sharing a deep packet inspection parsing result according to another embodiment of the present application;
FIG. 4 is a flow chart of a method for sharing a deep packet inspection parsing result according to still another embodiment of the present application;
FIG. 5 is a flow chart of a method for acquiring a deep packet inspection parsing result according to an embodiment of the present application;
FIG. 6 is a flow chart of a method for acquiring a deep packet inspection parsing result according to another embodiment of the present application;
FIG. 7 is a flow chart of a method for acquiring a deep packet inspection parsing result according to still another embodiment of the present application;
FIG. 8 is a schematic structural diagram of a serving network element according to an embodiment of the present application;
FIG. 9 is a schematic structural diagram of a serving network element according to another embodiment of the present application;
FIG. 10 is a schematic structural diagram of a serving network element according to still another embodiment of the present application;
FIG. 11 is a schematic structural diagram of a forwarding network element according to an embodiment of the present application;
FIG. 12 is a schematic structural diagram of a forwarding network element according to another embodiment of the present application;
FIG. 13 is a schematic structural diagram of a forwarding network element according to still another embodiment of the present application;
FIG. 14 is an interaction diagram of a user terminal, a forwarding network element and a serving network element based on a 3GPP EPS mobile network adopting a subscription condition scheme according to an embodiment of the present application;
FIG. 15 is an interaction diagram of a user terminal, a forwarding network element and a serving network element based on a 3GPP UMTS mobile network adopting a subscription condition scheme according to an embodiment of the present application;
FIG. 16 is an interaction diagram of a user terminal, a forwarding network element and a serving network element based on a fixed network adopting a subscription condition scheme according to an embodiment of the present application;
FIG. 17 is an interaction diagram of a user terminal, a forwarding network element and a serving network element in a 3GPP EPS mobile network adopting a scheme of taking an IP five-tuple as a DPI flow identifier according to an embodiment of the present application;
FIG. 18 is an interaction diagram of a user terminal, a forwarding network element and a serving network element based on a 3GPP EPS mobile network adopting a scheme of taking an IPv6 flow label as a DPI flow identifier according to an embodiment of the present application;
FIG. 19 is an interaction diagram of a user terminal, a forwarding network element and a serving network element accessing a fixed network based on a local area network adopting a DPI flow identifier scheme according to an embodiment of the present application; and
FIG. 20 is an interaction diagram of a user terminal, a forwarding network element and a serving network element based on a universal network adopting a scheme of a subscription condition in combination with a DPI flow identifier according to an embodiment of the present application.

### DESCRIPTION OF EMBODIMENTS

In the following description, for purposes of explanation and not limitation, specific details are set forth, such as a particular system structure, an interface and techniques, in order to provide a thorough understanding of the present application. However, it will be clear to persons skilled in the art that the present invention can also be implemented in other embodiments without these specific details. In other cases, detailed descriptions of well-known devices, circuits, and methods are omitted so as not to obscure the description of the present application with unnecessary details.

The present invention will be illustrated in detail in the following by referring to the accompanying drawings and specific embodiments.

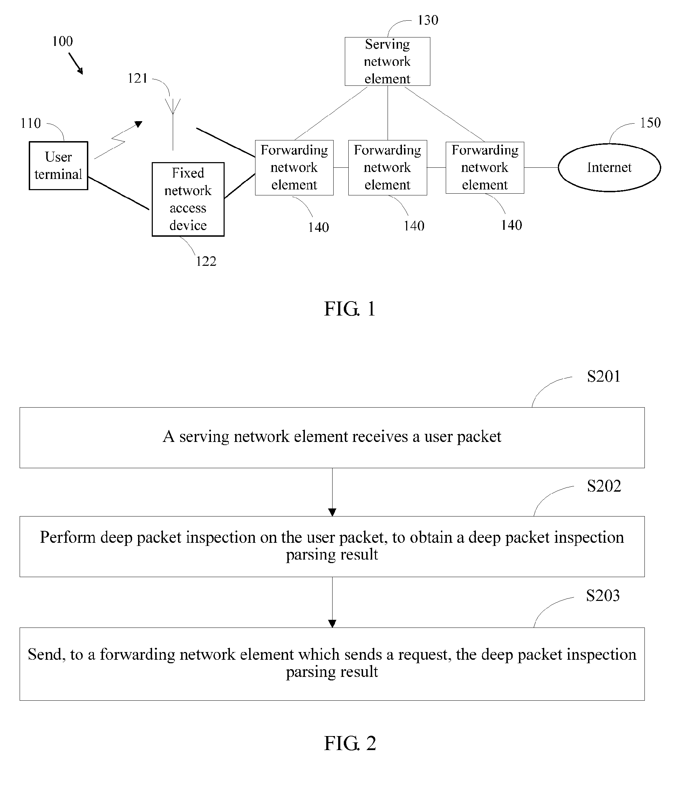

Refer to FIG. 1, which is a schematic structural diagram of a system for sharing a deep packet inspection parsing result, which can be applied to a method for sharing a deep packet inspection parsing result provided by the present application, the system 100 for sharing the deep packet inspection parsing result can include a user terminal 110, a wireless access device 121 or a fixed network access device 122, at least one serving network element 130, a plurality of forwarding network elements 140 and the Internet 150. The user terminal 110 is connected with the wireless access device 121 or the fixed network access device 122, the wireless access device 121 or the fixed network access device 122 is connected with a first forwarding network element 140, over the plurality of forwarding network elements 140, and then is connected with the Internet 150 through a last forwarding network element 140. The serving network element 130 is connected with the plurality of forwarding network elements 140 in a point-to-multipoint manner. It should be noted that the serving network element 130 and the forwarding network element 140 can be directly connected or connected through a plurality of relay units (not shown).

The user terminal 110 can be a mobile network terminal such as a mobile phone, or a fixed network terminal such as a computer.

The wireless access device 121 or the fixed network access device 122 can act as an intermediary between the user terminal 110 and the first forwarding network element 140, for example, the wireless access device 121 or the fixed network access device 122 can forward downlink packet data received from the first forwarding network element 140 to the user terminal 110, and forward data received from the terminal 110 as uplink packet data to the first forwarding network element 140 through the wireless access device 121 or the fixed network access device 122. It should be understood that, when the user terminal 110 is a mobile network terminal, the user terminal 110 is connected through the wireless access device 121 and when the user terminal 110 is a fixed network terminal, the user terminal 110 is connected through the fixed network access device 122.

The serving network element 130 is a network device, having the capability to perform application layer analysis on the user packet, or based on inspection of flow characteristics identify the application layer service type corresponding to the user packet and/or extract critical information of the application layer thereof, i.e., a node having the capability of deep packet inspection (DPI, Deep Packet Inspection). The serving network element 130 can be deployed with other net elements integratedly, or can be a dedicated DPI device, or even a DPI network or a DPI cloud formed by multiple DPI devices.

The forwarding network element 140 is a network device, having the capability of user packet forwarding, it forwards uplink packet data received by itself to the next forwarding network element 140 or sends to a destination node (not shown) through the Internet 150; or it forwards downlink packet data received by itself to the next forwarding network element 140 or sends to the user terminal through the wireless access device 121 or the fixed network access device 122. In terms of a mobile network, the forwarding network element 140 includes a base station, a serving GPRS support node (SGSN, Serving GPRS Support Node), a gateway GPRS support node (GGSN, Gateway GPRS Support Node), a serving gateway (S-GW, Serving Gateway), a packet data network gateway (P-GW, PDN Gateway), a packet data serving node (PDSN, Packet Data Serving Node), an access service network gateway (ASN-GW, Access Service Network Gateway) and so on; in terms of a fixed network, the forwarding network element 140 includes a switch, a router, a gateway, a broadband remote access server (BRAS, Broadband Remote Access Server) and so on.

The Internet 150 sends the user packet to a destination, such as another network or a terminal device.

Direction from the user terminal 110 to the Internet 150 is defined as an uplink direction of the user packet, and direction from the Internet 150 to the user terminal 110 is defined as a downlink direction of the user packet. Similarly, direction from the serving network element 130 to the forwarding network element 140 is defined as a downlink direction of the parsing result, and direction from the forwarding network element 140 to the serving network element 130 is defined as an uplink direction of the parsing result.

When a user needs to upload a user packet, the user terminal 110 sends the user packet to the wireless access device 121 or the fixed network access device 122, the wireless access device 121 or the fixed network access device 122 sends the user packet to one of the forwarding network elements 140, the forwarding network element 140 calculates a suitable path and then sends the user packet to the next forwarding network element 140, and so forth, until the user packet is sent to the Internet 150. When a user needs to download a user packet, the Internet 150 sends the received user packet to one of the forwarding network elements 140, the forwarding network element 140 calculates a suitable path and then sends the user packet to the next forwarding network element 140, and so forth, until the user packet is sent to the user terminal 110.

Refer to FIG. 2, which is a flow chart of a method for sharing a deep packet inspection parsing result according to an embodiment of the present application. The method for sharing the DPI parsing result includes:

5201: A serving network element receives a user packet.

The user terminal uploads or downloads the user packet through a forwarding network element. Upon receiving an uplink or a downlink user packet, the forwarding network element sends the user packet to the serving network element. The serving network element stores the user packet locally after receiving the user packet.

S202: The serving network element performs deep packet inspection on the user packet, to obtain a deep packet inspection parsing result.

After receiving the user packet, the serving network element performs parsing and calculation on the user packet, so as to obtain information below the application layer and/or application layer information, such as IP five-tuple, service type of the application layer, keyword and so on. The IP five-tuple refers to source address, destination address, source port, destination port and protocol type. The deep packet inspection parsing result can be any combination of information below the application layer and application layer information, configuration of which can be made according to the needs of the user. The deep packet inspection parsing result can be a final interpretation result or an intermediate interpretation result.

S203: The serving network element sends, to a forwarding network element which sends a request, the deep packet inspection parsing result, to achieve sharing of the deep packet inspection parsing result.

The forwarding network element, which needs to subscribe to the deep packet inspection parsing result, sends the request to the serving network element. After receiving the request, the serving network element sends, to the forwarding network element which sends the request, the deep packet inspection parsing result. Where, the request can be a deep packet inspection subscription request, or a deep packet inspection request.

In particular, when a plurality of forwarding network elements need to use the deep packet inspection parsing result of the same user packet, the serving network element can respectively send the deep packet inspection parsing result of the same user packet to the plurality of forwarding network elements, to achieve sharing of the deep packet inspection parsing result.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

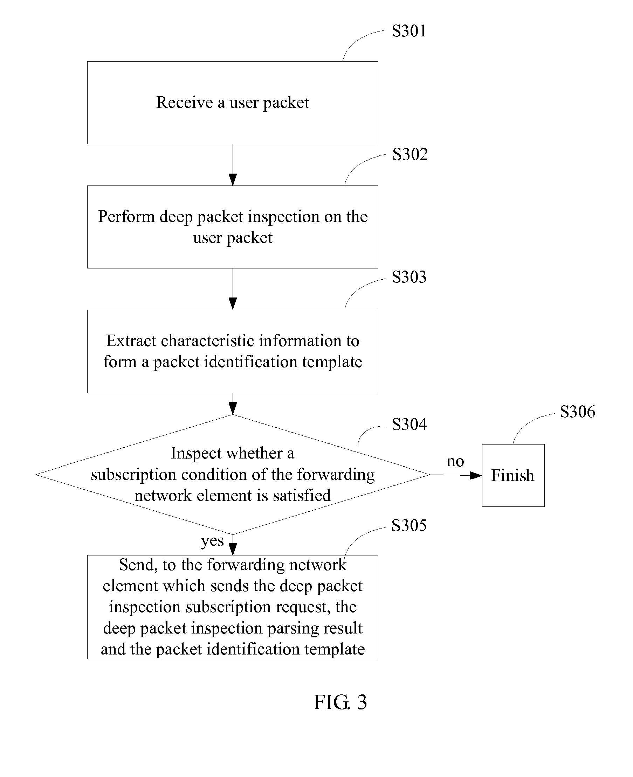

Refer to FIG. 3, which is a flow chart of a method for sharing a deep packet inspection parsing result according to another embodiment of the present application. The method for sharing the DPI parsing result includes:

S301: A serving network element receives a user packet.

The user terminal uploads or downloads the user packet through a forwarding network element. The first forwarding network element to receive an uplink or a downlink user packet sends the received user packet to the serving network element. After receiving the user packet, the serving network element stores the user packet locally. Taking the system 100 for sharing a deep packet inspection parsing result, shown in FIG. 1 as an example, the forwarding network element 140 connected to the wireless access device 121 or the fixed network access device 122 is the first forwarding network element 140 to receive an uplink user packet, and the forwarding network element 140 connected to the Internet 150 is the first forwarding network element 140 to receive a downlink user packet.

In particular, the serving network element also can receive a needed packet identification template type, where the packet identification template type can be a type of IP five-tuple, a type of IP five-tuple + transmission control protocol sequence number, or a type of a hardware address.

S302: The serving network element performs deep packet inspection for the user packet, to obtain a deep packet inspection parsing result.

Step S302 is substantially the same with Step S202 in the aforementioned embodiment, refer to relevant description of Step S202 in the aforementioned embodiment for details, and accordingly not described further herein.

S303: The serving network element extracts characteristic information from the user packet or the deep packet inspection parsing result, to form a packet identification template.

After performing the deep packet inspection on the user packet, the serving network element, according to the packet identification template type, extracts the characteristic information from the user packet or the deep packet inspection parsing result to fill the packet identification template type, so as to form the packet identification template, where the packet identification template is used to identify, from a data flow, a user packet matching the packet identification template. In particular, if the packet identification template type is the type of IP five-tuple, then extract, from the user packet or the deep packet inspection parsing result, the specific source network address, the destination network address, the source port number, the destination port number, the transport layer protocol type of the user packet, and fill the packet identification template type to obtain the packet identification template. The packet identification template includes at least one of a data link layer identification, network layer information, transport layer information, or a packet feature. The data link layer identification includes a source hardware address, a destination hardware address, virtual local area network identity (VLAN ID, Virtual Local Area Network IDentity) and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator (URL, Uniform Resource Location) and so on; the packet feature includes a packet length, a keyword and so on.

S304: The serving network element inspects whether a subscription condition of the forwarding network element is satisfied by information carried by the user packet or the deep packet inspection parsing result.

Prior to Step S304, the forwarding network element, which needs to subscribe to the deep packet inspection parsing result, sends a deep packet inspection subscription request to the serving network element, the deep packet inspection subscription request includes the subscription condition, which is used to indicate what type of user packet the forwarding network element needs to subscribe to, for example, the subscription condition is that "the destination network address of the user packet is Sina". The subscription condition includes at least one of a data link layer identification, network layer information, transport layer information, application layer information and a packet feature. Where, the data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on. It should be understood that, the subscription condition can reuse the characteristic information of the packet identification template, or also can use characteristic information irrelevant to the packet identification template. In particular, the deep packet inspection subscription request can be of a user level, of an equipment level or of a service flow level.

After receiving the deep packet inspection subscription request, the serving network element inspects whether a subscription condition of the forwarding network element is satisfied by information carried by the user packet or the deep packet inspection parsing result. If the subscription condition of the forwarding network element is satisfied, enter Step S305; if the subscription condition of the forwarding network element is not satisfied, enter Step S306.

S305: Send, to the forwarding network element which sends the deep packet inspection subscription request, the deep packet inspection parsing result and the packet identification template.

In a case of satisfying the subscription condition, the serving network element sends, to the forwarding network element which sends the deep packet inspection subscription request, the deep packet inspection parsing result and the packet identification template, for the forwarding network element to obtain, from a data flow, a user packet matching the packet identification template and achieve service control to the user packet. The service control includes accounting, lawful interception, service quality control, gate control, priority control, redirection, packet enhancement and other control operations. In particular, various service controls can be completed in the same forwarding network element, or various service controls can be completed in different forwarding network elements.

S306: Finish the process.

It should be noted that, in this embodiment, when other forwarding network elements send the deep packet inspection subscription request, the user packet may still remain on the first forwarding network element to receive an uplink or a downlink user packet, or even the user packet is not sent. Therefore, the forwarding network elements determine to subscribe to the deep packet inspection parsing result of which user packet through the subscription condition, and extract a user packet from a data flow through the packet identification template.

If a plurality of forwarding network elements all send a deep packet inspection subscription request to the serving network element and all the subscription condition of the forwarding network elements are satisfied, the serving network element respectively sends the deep packet inspection parsing result and the packet identification template to the plurality of forwarding network elements, to achieve sharing of the deep packet inspection parsing result.

To ensure data security, a service authentication mechanism also can be established. Before the forwarding network element sends the deep packet inspection request, the serving network element must first perform identity authorization to the forwarding network element, so as to ensure that the forwarding network element has a qualification to subscribe to the deep packet inspection parsing result.

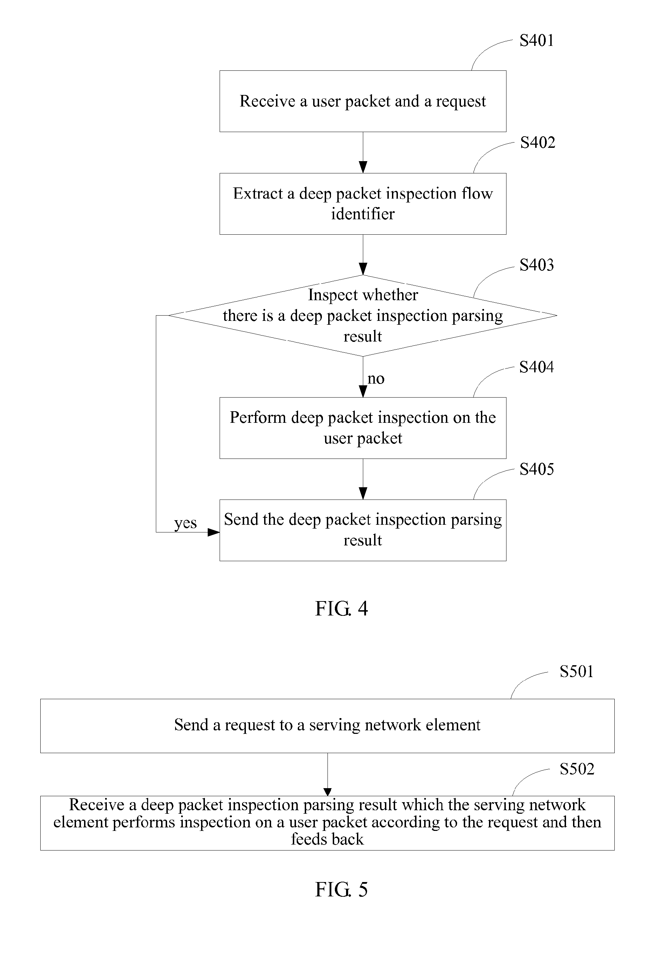

Refer to FIG. 4, which is a flow chart of a method for sharing a deep packet inspection parsing result according to still another embodiment of the present application. The method for sharing the DPI parsing result includes:

S401: A serving network element receives a user packet and a request.

The user terminal uploads or downloads the user packet through a forwarding network element. In the process of forwarding the user packet, after receiving the user packet, if it needs to subscribe to the deep packet inspection parsing result, the forwarding network element can send the request and the received user packet to the serving network element. After receiving the user packet, the serving network element stores the user packet locally.

The serving network element also receives a needed deep packet inspection flow identifier type, the deep packet inspection flow identifier type includes: a type of data link layer address, a type of IP five-tuple, a type of packet sequence number, a type of IPv6 flow label (IPv6 Flow Label), a type of GRE key and so on.

S402: the serving network element extracts, from the user packet, the characteristic information corresponding to the user packet, to form the deep packet inspection flow identifier.

After receiving the user packet, the serving network element extracts, according to the deep packet inspection flow identifier type and from the user packet, the characteristic information to form the deep packet inspection flow identifier. The deep packet inspection flow identifier is to indicate an identifier of the service flow to which the user packet belongs, including: data link layer address, IP five-tuple, packet sequence number, IPv6 flow label (IPv6 Flow Label), GRE key and so on.

S403: the serving network element inspects whether there is a deep packet inspection parsing result corresponding to the deep packet inspection flow identifier.

After extracting the deep packet inspection flow identifier from the user packet, the serving network element inspects whether a deep packet inspection parsing result corresponding to the deep packet inspection flow identifier is stored locally. If no, enter Step S404, and if yes, enter Step S405. It should be noted that, in another embodiment, the serving network element also can receive the deep packet inspection flow identifier sent by the forwarding network element, and then inspect whether a deep packet inspection parsing result corresponding to the deep packet inspection flow identifier is stored locally. If no, enter Step S404, and if yes, enter Step S405.

S404: The serving network element performs deep packet inspection on the user, to obtain a deep packet inspection parsing result.

In the absence of the deep packet inspection parsing result corresponding to the deep packet inspection flow identifier, the serving network element performs parsing and calculation on the user packet, so as to obtain information below the application layer and/or application layer information, such as IP five-tuple, application layer service type, keyword and so on. The IP five-tuple refers to source address, destination address, source port, destination port and protocol type. The deep packet inspection parsing result can be any combination of information below the application layer and application layer information, configuration of which can be made according to the needs of the user. The deep packet inspection parsing result can be a final interpretation result or an intermediate interpretation result.

It should be understood that, in the process of forwarding the user packet, the first forwarding network element which needs to subscribe to the deep packet inspection parsing result, sends the received user packet to the serving network element, and at this time, the serving network element does not have the corresponding deep packet inspection parsing result, and therefore, the serving network element performs deep packet inspection on the user packet, and then stores locally the deep packet inspection parsing result and the deep packet inspection flow identifier corresponding to the user packet. During a threshold time, the next forwarding network element which needs to subscribe to the deep packet inspection parsing result, sends again the received user packet to the serving network element. Because the serving network element has performed deep packet inspection on the user packet when receiving the user packet for the first time, and has stored locally the deep packet inspection parsing result and the deep packet inspection flow identifier corresponding to the user packet, and therefore, the serving network element knows through inspection that there is a deep packet inspection parsing result corresponding to the deep packet inspection flow identifier, and does not perform the deep packet inspection on the user packet, but searches the corresponding deep packet inspection parsing result via the deep packet inspection flow identifier, and sends to the forwarding network element. By such analogy, until the whole user packet transfer is completed.

In particular, after receiving the user packet, the first forwarding network element which needs to subscribe to the deep packet inspection parsing result, sends the user packet to the serving network element. The serving network element extracts the deep packet inspection flow identifier according to the user packet, and inspects whether there is a corresponding deep packet inspection parsing result. The inspection result is no, thus the serving network element performs deep packet inspection on the user packet, and then stores the obtained deep packet inspection parsing result locally. Then, the serving network element feeds the deep packet inspection flow identifier back to the first forwarding network element which needs to subscribe to the deep packet inspection parsing result. The first forwarding network element which needs to subscribe to the deep packet inspection parsing result forwards the user packet and the deep packet inspection flow identifier to the next forwarding network element which needs to subscribe to the deep packet inspection parsing result. The next forwarding network element which needs to subscribe to the deep packet inspection parsing result, sends the deep packet inspection flow identifier to the serving network element. The serving network element inspects whether there is a deep packet inspection parsing result corresponding to the deep packet inspection flow identifier. The inspection result is yes, the serving network element does not perform the deep packet inspection on the user packet, but searches corresponding deep packet inspection parsing result via the deep packet inspection flow identifier, and sends to the forwarding network element. By such analogy, until the whole user packet transfer is completed.

S405: The serving network element sends, to the forwarding network element which sends the deep packet inspection request, the deep packet inspection parsing result.

After performing deep packet inspection on the user packet or searching the deep packet inspection parsing result, the serving network element sends the deep packet inspection parsing result to the forwarding network element which sends the deep packet inspection request, for the forwarding network element to perform service control. In particular, in the case that there is no the deep packet inspection parsing result in the serving network element, after performing deep packet inspection on the user packet and obtaining the deep packet inspection parsing result, the serving network element sends the deep packet inspection parsing result to the forwarding network element which sends the deep packet inspection request; in the case that there is the deep packet inspection parsing result in the serving network element, the serving network element sends the deep packet inspection parsing result stored locally to the forwarding network element which sends the deep packet inspection request, for the forwarding network element to achieve service control to the user packet. The service control includes accounting, lawful interception, service quality control, gate control, priority control, redirection, packet enhancement and other control operations. In particular, various service controls can be completed in the same forwarding network element, or various service controls can be completed in different forwarding network elements.

In particular, if a plurality of forwarding network elements all send a deep packet inspection request to the serving network element, the serving network element respectively sends the deep packet inspection parsing result to the plurality of forwarding network elements, to achieve sharing of the deep packet inspection parsing result.

It should be noted that a timing interrupt service program can be established in the serving network element, in the event of a timing interrupt, inspect whether a storage time or an access time of the deep packet inspection parsing result is larger than a threshold time. If not larger than the threshold time, keep the deep packet inspection parsing result, and if larger than the threshold time, delete the deep packet inspection parsing result, so that an aging mechanism is established to prevent from overflowing.

It should be emphasized that, unlike the aforementioned embodiment, the action of the forwarding network element sending the deep packet inspection request occurs after receiving the user packet but not before receiving the user packet, and thus it is not needed to determine, through the subscription condition, which deep packet inspection parsing result is subscribed to by the forwarding network element, the forwarding network element can subscribe to the deep packet inspection parsing result corresponding to the user packet by sending the user packet and the deep packet inspection request at the same time, and this embodiment neither need to extract, from a data flow, the user packet corresponding to the deep packet inspection parsing result through the packet identification template.

To ensure data security, a service authentication mechanism can be established in the serving network element, before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

The serving network element, through performing the deep packet inspection on the user packet, and sending the same deep packet inspection parsing result respectively to a plurality of forwarding network elements which need to subscribe to the deep packet inspection parsing result, achieves sharing of the deep packet inspection parsing result, so that the occupied computing resources of the forwarding network element can be reduced and the packet forwarding efficiency of the forwarding network element can be improved.

Refer to FIG. 5, which is a flow chart of a method for acquiring a deep packet inspection parsing result according to an embodiment of the present application. The method for acquiring a deep packet inspection parsing result includes:

S501: A forwarding network element sends a request to a serving network element.

The forwarding network element sends the request to the serving network element. Where, the request can be a deep packet inspection subscription request, or a deep packet inspection request.

S502: The forwarding network element receives a deep packet inspection parsing result which the serving network element performs inspection on a user packet according to the request and then feeds back.

After receiving the user packet and the request, the serving network element performs parsing and calculation on the user packet, so as to obtain the deep packet inspection parsing result. The serving network element sends the deep packet inspection parsing result to the forwarding network element, and correspondingly, the forwarding network element receives the deep packet inspection parsing result. Where the deep packet inspection parsing result can be any combination of information below the application layer and application layer information, such as IP five-tuple, application layer service type, keyword and so on, configuration of which can be made according to the needs of the user. The IP five-tuple refers to source address, destination address, source port, destination port and protocol type. It should be noted that the deep packet inspection parsing result can be a final interpretation result or an intermediate interpretation result.

In particular, if a plurality of forwarding network elements all send a request to the serving network element, the serving network element respectively sends the deep packet inspection parsing result to the plurality of forwarding network elements, to achieve sharing of the deep packet inspection parsing result.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

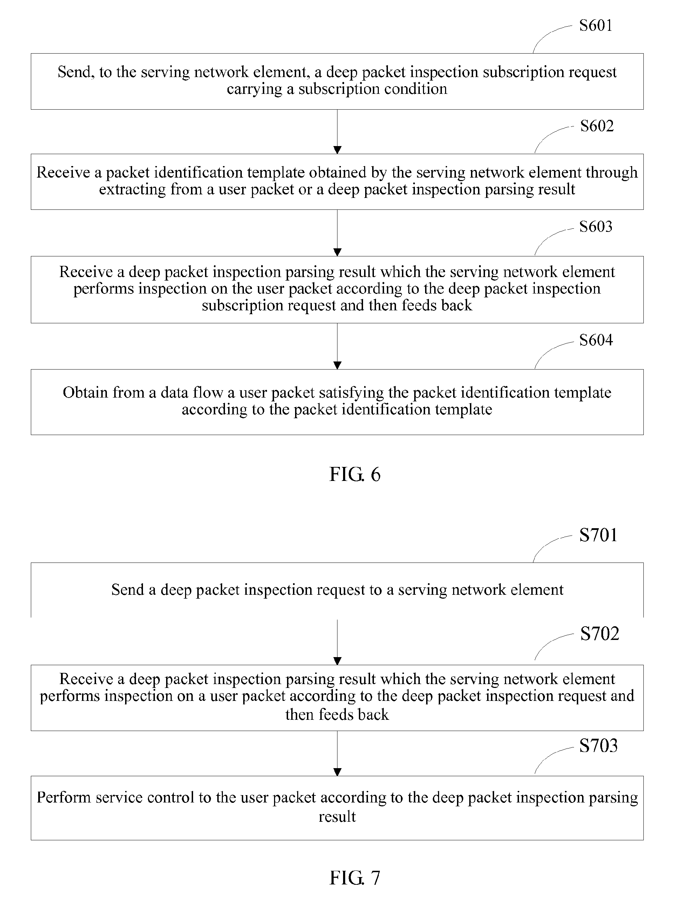

Refer to FIG. 6, which is a flow chart of a method for acquiring a deep packet inspection parsing result according to another embodiment of the present application. The method for acquiring a deep packet inspection parsing result includes:

S601: A forwarding network element sends, to a serving network element, a deep packet inspection subscription request carrying a subscription condition.

The user terminal uploads or downloads the user packet through a forwarding network element. The first forwarding network element to receive an uplink or a downlink user packet sends the received user packet to the serving network element. The serving network element performs deep packet inspection on the user packet, thus to obtain a deep packet inspection parsing result and store it locally.

The forwarding network element, which needs to subscribe to the deep packet inspection parsing result, can send to the serving network element a deep packet inspection subscription request carrying a subscription condition. Where the subscription condition is used to indicate what type of user packet the forwarding network element needs to subscribe to, for example, the subscription condition is that "the destination network address of the user packet is Sina". The subscription condition includes at least one of a data link layer identification, network layer information, transport layer information, application layer information and a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on. The deep packet inspection subscription request can be of a user level, of an equipment level or of a service flow level.

In particular, the forwarding network element also sends to the serving network element a packet identification template type, wherein the packet identification template type can be a type of IP five-tuple, a type of IP five-tuple + transmission control protocol sequence number, or a type of a hardware address.

S602: The forwarding network element receives a packet identification template extracted by the serving network element from the user packet or the deep packet inspection parsing result.

The serving network element extracts characteristic information from the user packet or the deep packet inspection parsing result, fills the packet identification template type and obtains the packet identification template. In particular, if the packet identification template type is the type of IP five-tuple, then extract, from the user packet or the deep packet inspection parsing result, the specific source network address, the destination network address, the source port number, the destination port number, the transport layer protocol type of the user packet, and fill the packet identification template type to obtain the packet identification template. Where the deep packet inspection parsing result can be any combination of information below the application layer and application layer information, such as IP five-tuple, application layer service type, keyword and so on, configuration of which can be made according to the needs of the user. Where the IP five-tuple refers to source address, destination address, source port, destination port and protocol type. It should be noted that the deep packet inspection parsing result can be a final interpretation result or an intermediate interpretation result. The packet identification template is used to identify, from a data flow, a user packet matching the packet identification template. The packet identification template includes at least one of a data link layer identification, network layer information, transport layer information, or a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on.

It should be understood that, the packet identification template can reuse the characteristic information of the subscription condition, or also can use characteristic information irrelevant to the subscription condition.

S603: The forwarding network element receives a deep packet inspection parsing result which the serving network element performs inspection on a user packet according to the deep packet inspection subscription request and then feeds back.

The serving network element sends the deep packet inspection parsing result to the network elements which sends the deep packet inspection subscription request and the subscription condition of which is satisfied. Correspondingly, the forwarding network element receives the deep packet inspection parsing result.

S604: The forwarding network element obtains, from a data flow, a user packet matching the packet identification template according to the packet identification template.

The first forwarding network element to receive an uplink or a downlink user packet continues to send the user packet to the next forwarding network element. When the data flow containing the user packet passes through the forwarding network element, if the forwarding network element has subscribed to the deep packet inspection parsing result, the forwarding network element can obtain, from the data flow, a user packet matching the packet identification template according to the received packet identification template, to achieve service control to the user packet. By such analogy, until the whole user packet transfer is completed. The service control includes accounting, lawful interception, service quality control, gate control, priority control, redirection, packet enhancement and other control operations. For example, when the deep packet inspection parsing result indicates that the user packet contains illegal words, then the forwarding network element discards the user packet. It should be noted that various service controls can be completed in the same forwarding network element, or various service controls can be completed in different forwarding network elements.

In particular, if a plurality of forwarding network elements all send a deep packet inspection subscription request to the serving network element and all the subscription conditions are satisfied, the serving network element respectively sends the deep packet inspection parsing result and the packet identification template to the plurality of forwarding network elements, to achieve sharing of the deep packet inspection parsing result.

It should be noted that, in this embodiment, when other forwarding network elements send the deep packet inspection subscription request, the user packet may still remain on the first forwarding network element to receive an uplink or a downlink user packet, or even the user packet is not sent. Therefore, the forwarding network elements determine to subscribe to the deep packet inspection parsing result of which user packet through the subscription condition, and extract a user packet from a data flow through the packet identification template.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

Refer to FIG. 7, which is a flow chart of a method for acquiring a deep packet inspection parsing result according to still another embodiment of the present application.

S701: A forwarding network element sends a deep packet inspection request to a serving network element.

The user terminal uploads or downloads the user packet through a forwarding network element. In the process of forwarding the user packet, after receiving the forwarded user packet, each forwarding network element, if there is a need to subscribe to the deep packet inspection parsing result, can send the deep packet inspection request to the serving network element. In particular, a deep packet inspection flow identifier type is also sent to the serving network element, where the deep packet inspection flow identifier type includes: a type of data link layer address, a type of IP five-tuple, a type of packet sequence number, a type of IPv6 flow label (IPv6 Flow Label), a type of GRE key and so on.

S702: The forwarding network element receives a deep packet inspection parsing result which the serving network element performs inspection on a user packet according to the deep packet inspection request and then feeds back.

The serving network element inspects to the user packet according to the deep packet inspection request, and feeds the deep packet inspection parsing result back to the forwarding network element. Correspondingly, the forwarding network element receives the deep packet inspection parsing result. Where the deep packet inspection parsing result can be any combination of information below the application layer and application layer information, such as IP five-tuple, application layer service type ,keyword and so on, configuration of which can be made according to the needs of the user. The IP five-tuple refers to source address, destination address, source port, destination port and protocol type. It should be noted that the deep packet inspection parsing result can be a final interpretation result or an intermediate interpretation result. In particular, the serving network element receives a deep packet inspection flow identifier type, extracts corresponding characteristic information to form a deep packet inspection flow identifier and sends to the forwarding network element. Correspondingly, the forwarding network element receives the deep packet inspection flow identifier.

S703: The forwarding network element performs service control to the user packet according to the deep packet inspection parsing result.

The forwarding network element performs service control to the user packet according to the received deep packet inspection parsing result. The service control includes accounting, lawful interception, service quality control, gate control, priority control, redirection, packet enhancement and other control operations. Various service controls can be completed in the same forwarding network element, or various service controls can be completed in different forwarding network elements.

In particular, if a plurality of forwarding network elements all send a deep packet inspection request to the serving network element, the serving network element respectively sends the deep packet inspection parsing result to the plurality of forwarding network elements, to achieve sharing of the deep packet inspection parsing result.

It should be emphasized that, unlike the aforementioned embodiment, the action of the forwarding network element sending the deep packet inspection request occurs after receiving the user packet, but not before receiving the user packet, and thus it is not needed to determine, through the subscription condition, which deep packet inspection parsing result is subscribed to by the forwarding network element, the forwarding network element can subscribe to the deep packet inspection parsing result corresponding to the user packet by sending the user packet and the deep packet inspection request at the same time, and this embodiment neither need to extract, from a data flow, the user packet corresponding to the deep packet inspection parsing result through the packet identification template.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

Through establishing, by the forwarding network element, convention with the serving network element, when the forwarding network element sends the deep packet inspection request to the serving network element, the serving network element will push the deep packet inspection parsing result stored locally to the forwarding network element. Different forwarding network elements can respectively request to subscribe to the same deep packet inspection parsing result from the serving network element, to achieve sharing of the deep packet inspection parsing result, so that the occupied computing resources of the forwarding network element is reduced and the packet forwarding efficiency of the forwarding network element is improved.

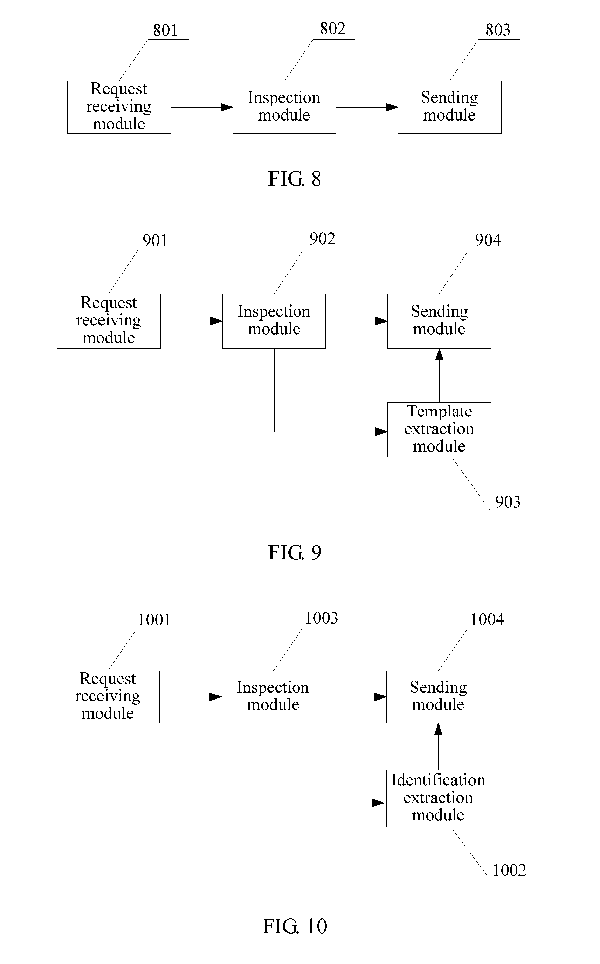

Refer to FIG. 8, which is a schematic structural diagram of a serving network element according to an embodiment of the present application. The serving network element includes: a request receiving module 801, an inspection module 802 and a sending module 803.

The request receiving module 801 is configured to receive a user packet. For example, the request receiving module 801 receives an uplink or a downlink user packet sent by a forwarding network element, and stores the user packet locally.

The inspection module 802 is configured to perform deep packet inspection on the user packet, to obtain a deep packet inspection parsing result and store it locally.

For example, the inspection module 802 performs parsing and calculation on the user packet, so as to obtain information below the application layer and/or application layer information, such as IP five-tuple, application layer service type, keyword and so on . The IP five-tuple refers to source address, destination address, source port, destination port and protocol type. The deep packet inspection parsing result can be any combination of information below the application layer and application layer information, configuration of which can be made according to the needs of the user. The deep packet inspection parsing result can be a final interpretation result or an intermediate interpretation result.

The sending module 803 is configured to send, to a forwarding network element which sends a request, the deep packet inspection parsing result, to achieve sharing of the deep packet inspection parsing result.

In particular, if a plurality of forwarding network elements need to use the deep packet inspection parsing result of the same user packet, these forwarding network elements all can send a request to the serving network element, and the serving network element sends the deep packet inspection parsing result of the same user packet to these forwarding network elements, to achieve sharing of the deep packet inspection parsing result.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

Refer to FIG. 9, which is a schematic structural diagram of a serving network element according to another embodiment of the present application. The serving network element includes: a request receiving module 901, an inspection module 902, a template extraction module 903 and a sending module 904.

The request receiving module 901 is configured to receive a deep packet inspection subscription request carrying a subscription condition. The subscription condition includes at least one of a data link layer identification, network layer information, transport layer information, application layer information and a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on. In particular, the deep packet inspection subscription request can be of a user level, of an equipment level or of a service flow level.

It should be noted that, in this embodiment, the user packet received by the request receiving module 901 is from the first forwarding network element to receive an uplink or a downlink user packet.

In particular, the request receiving module 901 also can receive a needed packet identification template type, where the packet identification template can be a type of IP five-tuple, a type of IP five-tuple + transmission control protocol sequence number, or a type of a hardware address.

The working principle of the inspection module 902 is similar to that of the corresponding modules in the aforementioned embodiment and accordingly not described further herein.

The template extraction module 903 is configured to extract characteristic information from a user packet or a deep packet inspection parsing result, fill a packet identification template type and form a packet identification template. In particular, if the packet identification template type is the type of IP five-tuple, then extract, from the user packet or the deep packet inspection parsing result, the specific source network address, the destination network address, the source port number, the destination port number, transport layer protocol type of the user packet, and fill the packet identification template type to obtain the packet identification template. The template extraction module 903 receives the user packet sent by the request receiving module 901 and/or the deep packet inspection parsing result sent by the inspection module 902, and extracts the characteristic information therefrom to form the packet identification template. The packet identification template includes at least one of a data link layer identification, network layer information, transport layer information, or a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on.

It should be understood that, the packet identification template can reuse the characteristic information of the subscription condition, or also can use characteristic information irrelevant to the subscription condition.

The sending module 904 is configured to inspect whether a subscription condition of the forwarding network element is satisfied by information carried by the user packet or the deep packet inspection parsing result, and when the subscription condition of the forwarding network element is satisfied, send, to a forwarding network element whose subscription condition is satisfied, the deep packet inspection parsing result,.

If a plurality of forwarding network elements all send a deep packet inspection subscription request to the serving network element and all the subscription conditions of the forwarding network elements are satisfied, the sending module 904 respectively sends the deep packet inspection parsing result and the packet identification template to the plurality of forwarding network elements, to achieve sharing of the deep packet inspection parsing result.

It should be noted that, in this embodiment, when other forwarding network elements send the deep packet inspection subscription request, the user packet may still remain on the first forwarding network element to receive an uplink or a downlink user packet, or even the user packet is not sent. Therefore, the forwarding network elements, through the subscription condition, determine the deep packet inspection parsing result of which user packet to be subscribed to, and extract a user packet from a data flow through the packet identification template.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe the deep packet inspection parsing result.

Refer to FIG. 10, which is a schematic structural diagram of a serving network element according to still another embodiment of the present application. The serving network element includes: a request receiving module 1001, an identification extraction module 1002, an inspection module 1003 and a sending module 1004.

The request receiving module 1001 is configured to receive a deep packet inspection request and a user packet, and store the user packet locally. In the process of forwarding the user packet in this embodiment, the request receiving module 1001 receives the user packet for several times. In particular, the request receiving module 1001 is further configured to receive a deep packet inspection flow identifier type, where the deep packet inspection flow identifier type includes: a type of data link layer address, a type of IP five-tuple, a type of packet sequence number, a type of IPv6 flow label (IPv6 Flow Label), a type of GRE key and so on. In particular, the request receiving module 1001 is further configured to receive the deep packet inspection flow identifier.

The identification extraction module 1002 is configured to acquire a deep packet inspection flow identifier formed by the characteristic information corresponding to the user packet. In particular, the identification extraction module 1002 extracts, from the user packet, or receives, from the forwarding network element, the deep packet inspection flow identifier formed by the characteristic information corresponding to the user packet.

The inspection module 1003 is configured to inspect whether there is a deep packet inspection parsing result corresponding to the deep packet inspection flow identifier, and when there is no corresponding deep packet inspection parsing result, perform the deep packet inspection on the user packet, to obtain the deep packet inspection parsing result and store.

In the case that there is no deep packet inspection parsing result corresponding to the deep packet inspection flow identifier, the inspection module 1003 performs parsing and calculation on the user packet, so as to obtain information below the application layer and/or application layer information, such as IP five-tuple, application layer service type, keyword and so on. The IP five-tuple refers to source address, destination address, source port, destination port and protocol type. The deep packet inspection parsing result can be any combination of information below the application layer and application layer information, configuration of which can be made according to the needs of the user. The deep packet inspection parsing result can be a final interpretation result or an intermediate interpretation result.

If the deep packet inspection has been performed on the user packet, the deep packet inspection flow identifier and the deep packet inspection parsing result corresponding to the user packet are stored locally, the inspection module 1003 can acquire the deep packet inspection parsing result corresponding to deep packet inspection flow identifier through inspection, and therefore does not perform the deep packet inspection on the user packet, but searches corresponding deep packet inspection parsing result through the deep packet inspection flow identifier.

The sending module 1004 is configured to send, to a forwarding network element which sends the deep packet inspection request , the deep packet inspection parsing result, to achieve sharing of the deep packet inspection parsing result.

It should be noted that, if a plurality of forwarding network elements all send a deep packet inspection request to the serving network element, the sending module 1004 respectively sends the deep packet inspection parsing result to the plurality of forwarding network elements, to achieve sharing of the deep packet inspection parsing result.

It should be emphasized that, unlike the aforementioned embodiment, the action of the forwarding network element sending the deep packet inspection request occurs after receiving the user packet, but not before receiving the user packet, and thus it is not needed to, through the subscription condition, determine which deep packet inspection parsing result is subscribed to by the forwarding network element, the forwarding network element can acquire the deep packet inspection parsing result corresponding to the user packet by sending the user packet and the deep packet inspection request at the same time, and this embodiment neither need to extract from a data flow the user packet corresponding to the deep packet inspection parsing result through the packet identification template.

Furthermore, the serving network element also can be provided with a deletion module, configured to delete the deep packet inspection parsing result, if a storage time or an access time of the deep packet inspection parsing result is larger than a threshold time. For example, the deletion module periodically performs inspection for the deep packet inspection parsing result stored locally, if not larger than the threshold time, keep the deep packet inspection parsing result, and if larger than the threshold time, delete the deep packet inspection parsing result, so that an aging mechanism can be established to prevent from overflowing.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

The serving network element, through performing the deep packet inspection on the user packet, and sending the same deep packet inspection parsing result respectively to a plurality of forwarding network elements which need to subscribe to the deep packet inspection parsing result, achieves sharing of the deep packet inspection parsing result, so that the occupied computing resources of the forwarding network element is reduced and the packet forwarding efficiency of the forwarding network element is improved.

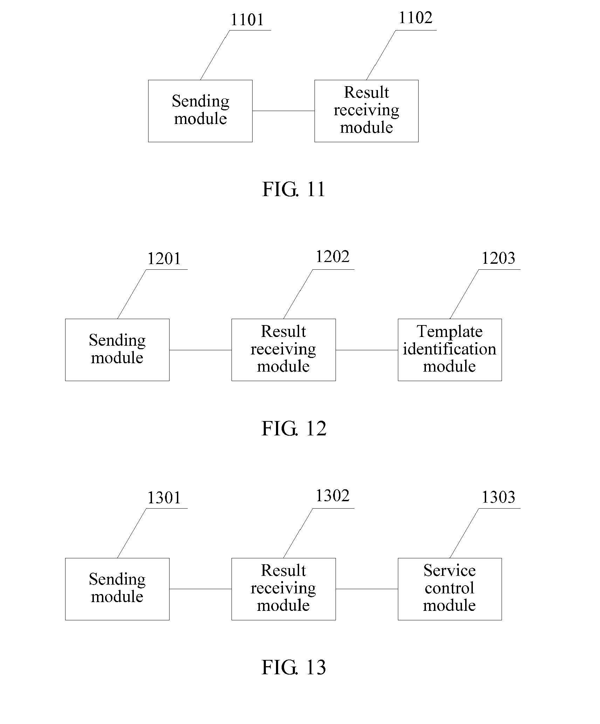

Refer to FIG. 11, which is a schematic structural diagram of a forwarding network element according to an embodiment of the present application. The forwarding network element includes: a sending module 1101 and a result receiving module 1102.

The sending module is configured to send a request to a serving network element. For example, after the forwarding network element receives an uplink or a downlink user packet, the sending module 1101 sends the request to the serving network element.

The result receiving module 1102 is configured to receive a deep packet inspection parsing result which the serving network element performs inspection on a user packet according to the request and then feeds back. For example, after the sending module 1101 sends a request to the serving network element, the serving network element performs parsing and calculation on the user packet, so as to obtain the deep packet inspection parsing result, and send to the result receiving module 1102. The deep packet inspection parsing result can be any combination of information below the application layer and application layer information, such as IP five-tuple, application layer service type, keyword and so on, configuration of which can be made according to the needs of the user. The IP five-tuple refers to source address, destination address, source port, destination port and protocol type. It should be noted that the deep packet inspection parsing result can be a final interpretation result or an intermediate interpretation result.

In particular, if the sending modules 1101 of a plurality of forwarding network elements all send a request to the serving network element, the serving network element respectively sends the deep packet inspection parsing result and a packet identification template to the plurality of forwarding network elements, to achieve sharing of the deep packet inspection parsing result.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe the deep packet inspection parsing result.

Refer to FIG. 12, which is a schematic structural diagram of a forwarding network element according to another embodiment of the present application. The forwarding network element includes a sending module 1201, a result receiving module 1102 and a template identification module 1203.

The sending module 1201 is configured to send, to a serving network element, a deep packet inspection subscription request carrying a subscription condition. In particular, the sending module 1201 is further configured to send to the serving network element a packet identification template type, where the packet identification template type can be , a type of IP five-tuple, a type of IP five-tuple + transmission control protocol sequence number, or a type of a hardware address. When a plurality of forwarding network elements form a forwarding network, the first forwarding network element to receive the user packet can send the user packet through the sending module 1201. Other forwarding network elements only needs to send a deep packet inspection subscription request carrying a subscription condition through the sending module 1201, if there is a need to subscribe to the deep packet inspection parsing result. The subscription condition is used to indicate what type of user packet the forwarding network element needs to subscribe to, for example, the subscription condition is that "the destination network address of the user packet is Sina". The subscription condition includes at least one of a data link layer identification, network layer information, transport layer information, application layer information and a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on. In particular, the deep packet inspection subscription request can be of a user level, of an equipment level or of a service flow level.

The result receiving module 1202 is configured to receive a deep packet inspection parsing result which the serving network element performs inspection on a user packet according to the deep packet inspection subscription request and then feeds back, and receive a packet identification template obtained through extracting, by the serving network element, from the user packet or the deep packet inspection parsing result, the characteristic information and filling the packet identification template type. In particular, if the packet identification template type is the type of IP five-tuple, then extract, from the user packet or the deep packet inspection parsing result, the specific source network address, the destination network address, the source port number, the destination port number, transport layer protocol type of the user packet, and fill the packet identification template type to obtain a packet identification template. For example, if the subscription condition is satisfied, the result receiving module 1202 receives the deep packet inspection parsing result fed back by the serving network element and receives the packet identification template. Where the packet identification template includes at least one of a data link layer identification, network layer information, transport layer information, or a packet feature. The data link layer identification includes a source hardware address, a destination hardware address, virtual local area network identity and so on; the network layer information and the transport layer information include a source network address, a destination network address, a source port number, a destination port number, a transport layer protocol type, a transmission control protocol sequence number, a differentiated services code point and so on; the application layer information includes an application layer protocol type, a uniform resource locator and so on; the packet feature includes a packet length, a keyword and so on.

It should be understood that, the packet identification template can reuse the characteristic information of the subscription condition, or also can use characteristic information irrelevant to the subscription condition.

The template identification module 1203 is configured to obtain from a data flow a user packet matching the packet identification template according to the packet identification template, to achieve service control to the user packet. For example, the template identification module 1203 compares the received packet identification template and the user packet passing the forwarding network element one by one. If the user packet matches the packet identification template, extract the user packet from the data flow and achieve service control to the user. The service control includes accounting, lawful interception, service quality control, gate control, priority control, redirection, packet enhancement and other control operations.

In particular, if the sending modules 1201 of a plurality of forwarding network elements all send a deep packet inspection subscription request to the serving network element and all the subscription condition of the forwarding network elements are satisfied, the serving network element respectively sends the deep packet inspection parsing result to the plurality of forwarding network elements, to achieve sharing of the deep packet inspection parsing result.

It should be noted that, in this embodiment, when the sending modules 1201 of other forwarding network elements send the deep packet inspection subscription request, the user packet may still remain on the first forwarding network element to receive an uplink or a downlink user packet, or even the user packet is not sent. Therefore, the forwarding network elements, through the subscription condition, determine to subscribe to the deep packet inspection parsing result of which user packet, and extract a user packet from a data flow through the packet identification template.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so as to ensure that the forwarding network element has a qualification to subscribe to the deep packet inspection parsing result.

Refer to FIG. 13, which is a schematic structural diagram of a forwarding network element according to still another embodiment of the present application. The forwarding network element includes a sending module 1301, a result receiving module 1302 and a service control module 1303.

The sending module 1301 is configured to send a deep packet inspection request to a serving network element. When a plurality of forwarding network elements form a forwarding network, each of the forwarding network elements which need to subscribe to the deep packet inspection parsing result can send the deep packet inspection request to the serving network element through the sending module 1301. The sending module 1301 is further configured to send a deep packet inspection flow identifier type, where the deep packet inspection flow identifier type includes: a type of data link layer address, a type of IP five-tuple, a type of packet sequence number, a type of IPv6 flow label (IPv6 Flow Label), a type of GRE key and so on. Furthermore, the sending module 1301 is further configured to send, to the serving network element, the deep packet inspection flow identifier.

The result receiving module 1302 is configured to receive a deep packet inspection parsing result, which the serving network element performs inspection on a user packet according to the deep packet inspection request and then feeds back.

The service control module 1303 is configured to perform service control to the user packet according to the deep packet inspection parsing result. The service control includes accounting, lawful interception, service quality control, gate control, priority control, redirection, packet enhancement and other control operations.

In particular, if the sending modules 1301 of a plurality of forwarding network elements all send a deep packet inspection request to the serving network element, the serving network element respectively sends the deep packet inspection parsing result to the plurality of forwarding network elements, to achieve sharing of the deep packet inspection parsing result.

It should be emphasized that, unlike the aforementioned embodiment, the action of the forwarding network element sending the deep packet inspection request occurs after receiving the user packet, but not before receiving the user packet, and thus it is not needed to determine, through the subscription condition, which deep packet inspection parsing result is subscribed to by the forwarding network element, the forwarding network element can acquire the deep packet inspection parsing result corresponding to the user packet by sending the user packet and the deep packet inspection request at the same time, and this embodiment neither need to extract from a data flow the user packet corresponding to the deep packet inspection parsing result through the packet identification template.

To ensure data security, a service authentication mechanism can be established in the serving network element. Before the forwarding network element sends the request, the serving network element must first perform deep packet inspection service registration for the forwarding network element, and perform service authorization to a successfully registered forwarding network element, so that the forwarding network element has a qualification to subscribe the deep packet inspection parsing result.

Through establishing, by the forwarding network element, convention through the serving network element, when the forwarding network element sends a request to the serving network element, the serving network element will push the deep packet inspection parsing result stored locally to the forwarding network element. Different forwarding network elements can respectively request to subscribe to the same deep packet inspection parsing result from the serving network element, to achieve sharing of the deep packet inspection parsing result, so that the occupied computing resources of the forwarding network element is reduced and the packet forwarding efficiency of the forwarding network element is improved.

Based on the above method for sharing/acquiring a deep packet inspection parsing result and the corresponding equipment, an embodiment of the present application further provides a system for sharing a deep packet inspection parsing result, including: a serving network element and a plurality of forwarding network elements, where the serving network element is respectively connected to the forwarding network elements directly or indirectly, and the specific network structure of the system for sharing a deep packet inspection parsing result can refer to FIG. 1 and relevant description.

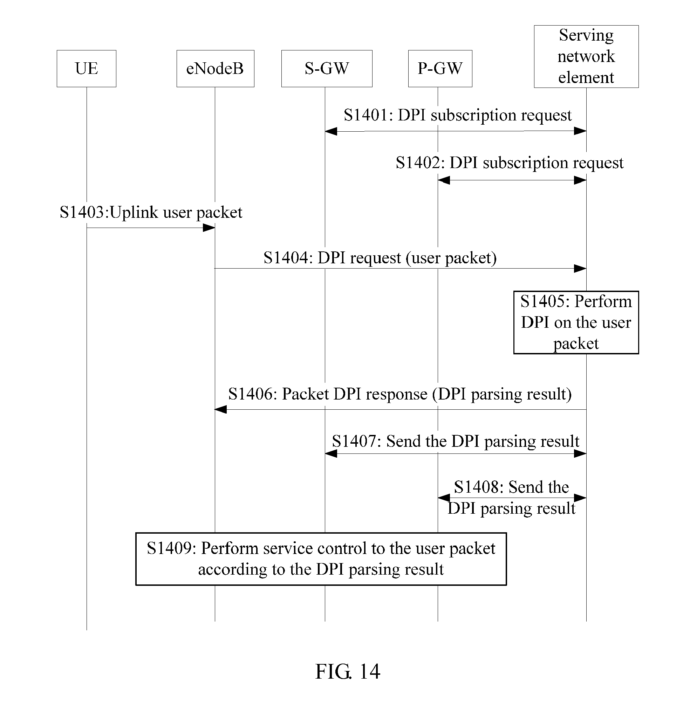

Refer to FIG. 14, description will be made in detail with reference to 3GPP EPS (The 3rd Generation Partnership Project Evolved Packet System) mobile network in the following. This application example focuses on an interaction among a user terminal, a forwarding network element and a serving network element, the contents of 3GPP EPS mobile network is incorporated herein by reference in its entirety, and meanwhile, this application example is also combined with the method for sharing/acquiring a deep packet inspection parsing result using the subscription condition. The eNodeB (Evolved NodeB), serving gateway (S-GW, Serving Gateway) and packet data network gateway (P-GW, PDN Gateway) in the 3GPP EPS mobile network are all forwarding network elements.

S1401 and S1402: when a user packet has not yet been transmitted, the serving gateway and the packet data network gateway respectively send a deep packet inspection subscription request to the serving network element. The deep packet inspection subscription request includes a subscription condition, in this embodiment, the subscription condition is IP five-tuple, i.e., defining the source address, the destination address, the source port, the destination port and the transport layer protocol type of the user packet. After receiving the deep packet inspection subscription request, the serving network element feeds a response message back respectively to the serving gateway and the packet data network gateway.

S1403: Uplink user packet. The user terminal (UE, User Equipment) sends the user packet to the eNodeB.

S1404: Send a DPI request. Here, the eNodeB, as the first forwarding network element to receive the user packet, sends a DPI request to the serving network element, and sends the user packet received from the user terminal to the serving network element. In particular, the DPI request can be considered to be presented when the serving network element receives the user packet by convention.

S1405: Perform DPI on the user packet. After receiving the DPI request, the serving network element performs parsing and calculation on the user packet, so as to obtain the deep packet inspection parsing result. The serving network element inspects IP five-tuple of the user packet to determine whether the subscription conditions of the serving gateway and the packet data network gateway are satisfied, and in this step, the serving network element also can extract and obtain a packet identification template from the user packet or the deep packet inspection parsing result. Here, the packet identification template also can be the IP five-tuple.

S1406: Packet DPI response. The serving network element responds the DPI parsing result and the packet identification template to the eNodeB through the packet DPI response.

S1407 and S1408: Send the DPI parsing result. Because the serving gateway and the packet data network gateway respectively present a deep packet inspection subscription request to the serving network element, and the subscription conditions of the two are satisfied, the serving network element sends the DPI parsing result and the packet identification template to the serving gateway and the packet data network gateway respectively. The serving gateway and the packet data network gateway feeds a response message back respectively to the serving network element after receiving the DPI parsing result.

S1409: Perform service control to the user packet according to the DPI parsing result. The eNodeB extracts a user packet from a data flow through the received user identification template, and performs service control to the user packet according to the deep packet inspection parsing result, and hereafter, the eNodeB continues to upload the user packet to the serving gateway and the packet data network gateway. The serving gateway and the packet data network gateway also extract the user packet from the data flow through the received user identification template, and perform service control to the user packet according to the deep packet inspection parsing result.

It should be noted that, the subscription condition in this application example also can use any combination of header domains of the user packet such as a source address, a destination address, a source port, a destination port, a transport layer protocol type, a packet sequence number, a differentiated services code point, an IPv6 flow label as the subscription condition.

In this application example, after receiving the user packet, the eNodeB sends the user packet to the serving network element for deep packet inspection and obtain the deep packet inspection parsing result fed back by the serving network element. The serving gateway and the packet data network gateway send a deep packet inspection subscription request to the serving network element, and then the serving network element sends the deep packet inspection parsing result obtained by previous parsing to the serving gateway and the packet data network gateway respectively, so as to achieve sharing of the same deep packet inspection parsing result in the eNodeB, the serving gateway and the packet data network gateway.

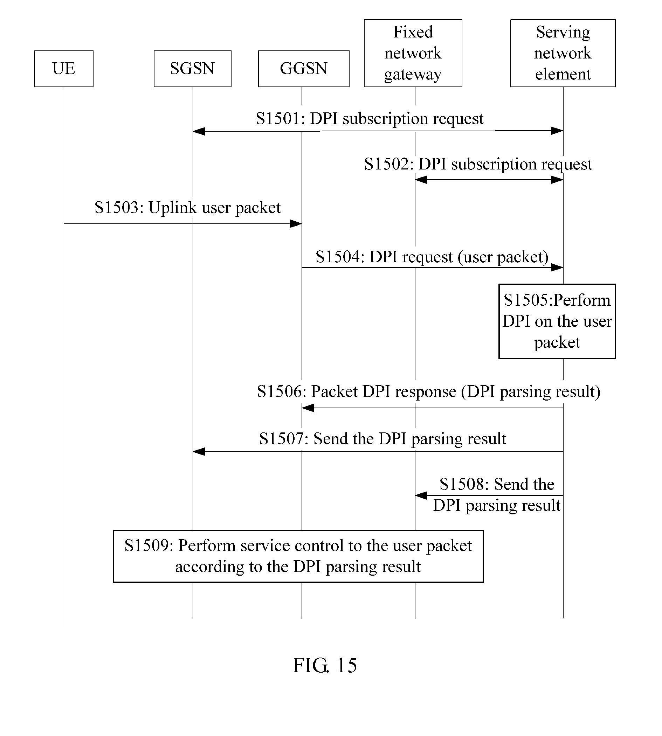

Refer to FIG. 15, description will be made in detail with reference to 3GPP UMTS (The 3rd Generation Partnership Project Universal Mobile Telecommunications System) mobile network in the following. This application example focuses on an interaction among a user terminal, a forwarding network element and a serving network element, the contents of 3GPP UMTS mobile network is incorporated herein by reference in its entirety, and meanwhile, this application example is also combined with the method for sharing/acquiring a deep packet inspection parsing result using the subscription condition. The gateway GPRS support node (GGSN, Gateway GPRS Support Node), the serving GPRS support node (SGSN, Serving GPRS Support Node) and the fixed network gateway in the 3GPP UMTS mobile network are all forwarding network elements.

S1501 and S1502: when a user packet has not yet been transmitted, the serving GPRS support node and the fixed network gateway respectively present a deep packet inspection subscription request to the serving network element. The deep packet inspection subscription request includes a subscription condition and a packet identification template type that need to be sent, in this embodiment, the subscription condition is a hypertext transport protocol (HTTP, Hypertext Transport Protocol) URL, namely the request link address of a HTTP packet. The packet identification template type is a type of IP five-tuple + transmission control protocol sequence number. The serving network element feeds a response message back respectively to the serving GPRS support node and the fixed network gateway after receiving the deep packet inspection subscription request.

S1503: Uplink user packet. The user terminal sends the user packet to the gateway GPRS support node.

S1504: Send a DPI request. Here, the gateway GPRS support node, as the first forwarding network element to receive the user packet, sends a DPI request to the serving network element, and sends the user packet received from the user terminal to the serving network element. In particular, the DPI request can be considered to be presented when the serving network element receives the user packet by convention.

S1505: Perform DPI on the user packet. After receiving the DPI request, the serving network element performs parsing and calculation on the user packet, so as to obtain the deep packet inspection parsing result. The serving network element inspects URL of the user packet to determine whether the subscription conditions of the serving GPRS support node and the fixed network gateway are satisfied, and in this step, the serving network element also can extract characteristic information from the user packet or the deep packet inspection parsing result, and fill it to the packet identification template type which is the type of IP five-tuple + transmission control protocol sequence number, to obtain a packet identification template.

S1506: Packet DPI response. The serving network element responds the DPI parsing result and the packet identification template to the gateway GPRS support node through a packet DPI response.

S1507 and S1508: Send the DPI parsing result. Because the serving GPRS support node and the fixed network gateway respectively present a deep packet inspection subscription request to the serving network element, and the subscription conditions of the two are satisfied, the serving network element sends the DPI parsing result and the packet identification template to the serving GPRS support node and the fixed network gateway respectively.

S1509: Perform service control to the user packet according to the DPI parsing result. The gateway GPRS support node extracts a user packet from a data flow through the received user identification template, and performs service control to the user packet according to the deep packet inspection parsing result, and hereafter, the gateway GPRS support node continues to upload the user packet to the serving GPRS support node and the fixed network gateway. The serving GPRS support node and the fixed network gateway also extract the user packet from the data flow through the received user identification template, and perform service control to the user packet according to the deep packet inspection parsing result.

It should be noted that, the subscription condition in this application example also can use any combination of application layer keywords such as an HTTP request type, a file transfer protocol (FTP, File Transfer Protocol) file name, an application layer protocol, and a data source name (DSN, Data Source Name) domain name as the subscription condition.

In this application example, after receiving the user packet, the gateway GPRS support node sends the user packet to the serving network element for deep packet inspection and obtain the deep packet inspection parsing result fed back by the serving network element. The serving GPRS support node and the fixed network gateway send a deep packet inspection subscription request to the serving network element, and then the serving network element sends the deep packet inspection parsing result obtained by previous parsing respectively to the serving GPRS support node and the fixed network gateway respectively, so as to achieve sharing of the same deep packet inspection parsing result in the gateway GPRS support node, the serving GPRS support node and the fixed network gateway.

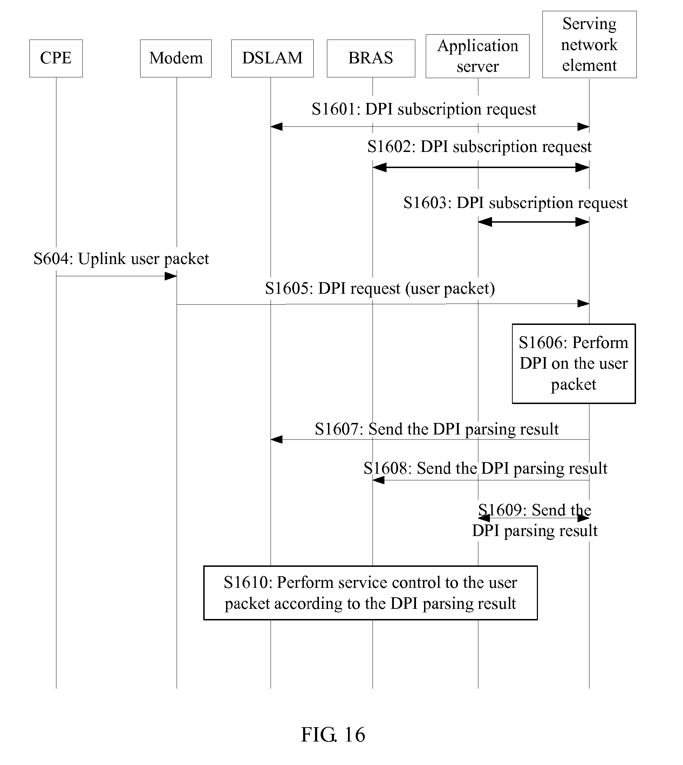

Referring to FIG. 16, description will be made in detail with reference to a fixed network in the following. This application example focuses on an interaction among a user terminal, a forwarding network element and a serving network element, the contents of fixed network is incorporated herein by reference in its entirety, and meanwhile, this application example is also combined with the method for sharing/acquiring a deep packet inspection parsing result using the subscription condition. The modem (Modem), digital subscriber line access multiplexer (DSLAM, Digital Subscriber Line Access Multiplexer), broadband remote access server (BRAS, Broadband Remote Access Server) and application server in the fixed network are all forwarding network elements.

S1601: when a user packet has not yet been transmitted, DSLAM presents a deep packet inspection subscription request to the serving network element. The deep packet inspection subscription request includes a subscription condition and a packet identification template type that needs to be sent. Here, the subscription condition is VLAN information, i.e., defining the VLAN which an Ethernet frame belongs to, and the packet identification template type is a type of a hardware address. The serving network element feeds a response message back to the DSLAM after receiving the deep packet inspection subscription request.

S1602: BRAS presents a deep packet inspection subscription request to the serving network element. The deep packet inspection subscription request includes a subscription condition. Here, the subscription condition is application type information, i.e., defining the application type to be P2P. The serving network element feeds a response message back to the BRAS after receiving the deep packet inspection subscription request.

S1603: The application server presents a deep packet inspection subscription request to the serving network element. The deep packet inspection subscription request includes a subscription condition. The subscription condition here is IPv6 flow label. To ensure data security, the serving network element configures the application server with a service authentication mechanism, so as to ensure that the server has the authority to acquire the DPI parsing result. After the service authentication is successful, the serving network element receives the deep packet inspection subscription request and feeds a response message back to the application server.

S1604: Uplink user packet. A customer premise equipment (CPE, Customer Premise Equipment) sends a user packet to the Modem.

S1605: Send a DPI request. After receiving the user packet, the Modem sends a DPI request to the serving network element, and sends the user packet received from the customer premise equipment to the serving network element. In particular, the DPI request can be considered to be presented when the serving network element receives the user packet by convention.

S1606: Perform DPI on the user packet. The serving network element performs parsing and calculation on the user packet after receiving the DPI request, so as to obtain the deep packet inspection parsing result.

S1607: Send the DPI parsing result. The serving network element determines whether the subscription condition of the DSLAM is satisfied by inspecting the subscription condition of the DSLAM, i.e., VLAN information, and the serving network element also can extract characteristic information, a source hardware address and a destination hardware address, from the user packet or the deep packet inspection parsing result, fill to the packet identification template type of the hardware address type, to obtain a packet identification template. Hereafter, the serving network element judges the subscription condition is satisfied, and sends both the deep packet inspection parsing result and the packet identification template to the DSLAM.

S1608: Send the DPI parsing result. The serving network element determines whether the subscription condition of the BRAS is satisfied by inspecting the subscription condition of the BRAS, i.e., application type information, and the serving network element also can extract characteristic information from the user packet or the deep packet inspection parsing result, fill to the packet identification template type of the IP five-tuple type, to obtain a packet identification template. Hereafter, the serving network element judges the subscription condition is satisfied, and sends both the deep packet inspection parsing result and the packet identification template to the BRAS.

S1609: Send the DPI parsing result. The serving network element determines whether the subscription condition of the application server is satisfied by inspecting the subscription condition of the application server, i.e. application type information. Furthermore, the serving network element also can extract characteristic information from the user packet or the deep packet inspection parsing result, fill to a packet identification template type and obtain a packet identification template. Hereafter, the serving network element judges the subscription condition is satisfied, and sends both the deep packet inspection parsing result and the packet identification template to the application server.

S1610: Perform service control to the user packet according to the DPI parsing result. The DSLAM, the BRAS and the application server extract a user packet from a data flow through the received user identification template, and perform service control to the user packet according to the deep packet inspection parsing result.

In this application example, DSLAM, BRAS and application server all present a subscription request to the serving network element, and in a case of satisfying the subscription condition, the serving network element sends the same deep packet inspection parsing result respectively to the DSLAM, the BRAS and the application server, to achieve sharing of the deep packet inspection parsing result. In particular, it can be seen from this application example that different forwarding network elements can send different subscription conditions, and also can identify the user packet through different packet identification templates.

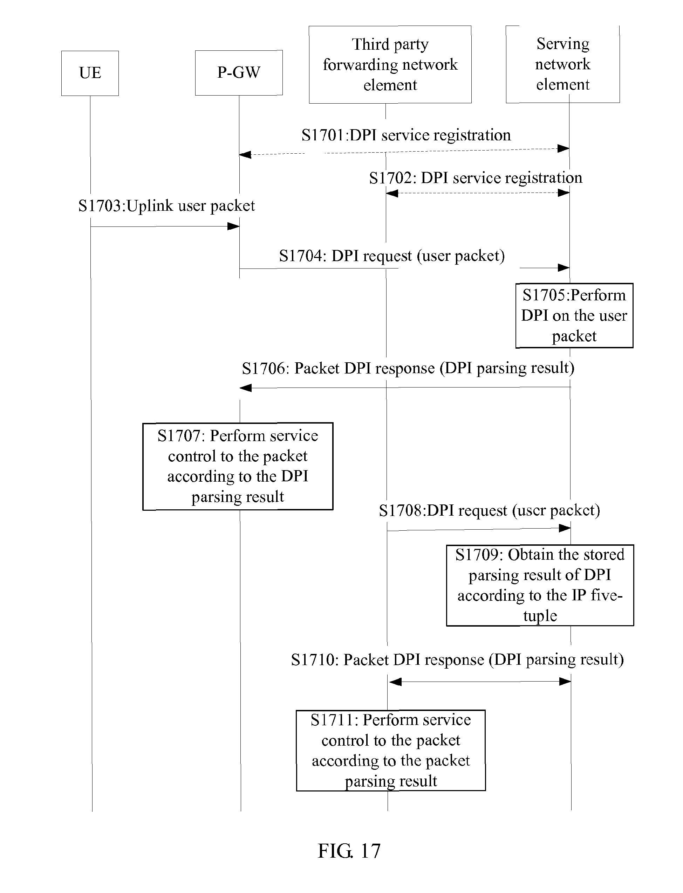

Refer to FIG. 17, description will be made in detail with reference to 3GPP EPS (The 3rd Generation Partnership Project Evolved Packet System) mobile network in the following. This application example focuses on an interaction among a user terminal, a forwarding network element and a serving network element, the contents of 3GPP EPS mobile network is incorporated herein by reference in its entirety, and meanwhile, this application example is also combined with the method for sharing/acquiring a deep packet inspection parsing result using the flow identifier. The P-GW in the 3GPP EPS mobile network is a forwarding network element.

S1701 and S1702: DPI service registration. The serving network element performs service authentication to a P-GW and a third party forwarding network element, to confirm the two have the authority to obtain the deep packet inspection parsing result. The serving network element respectively feeds registration acknowledgement message back to the P-GW and the third party forwarding network element, and indicates the DPI flow identifier type in the registration acknowledgement message, that is, indicating that the third party forwarding network element uses the IP five-tuple as a DPI flow identifier.

S1703: Uplink user packet. The user terminal (UE, User Equipment) sends a user packet to the P-GW.

S1704: Send a DPI request. Here, the P-GW sends a DPI request to the serving network element, and sends the user packet received from the user terminal to the serving network element. In particular, the DPI request can be considered to be presented when the serving network element receives the user packet by convention.

S1705: Perform DPI on the user packet. After receiving the DPI request, the serving network element extracts the DPI flow identifier, i.e., IP five-tuple, from the user packet; upon inspection, there is no corresponding DPI flow identifier, and thus parsing and calculation are performed on the user packet, so as to obtain the deep packet inspection parsing result. Hereafter, the serving network element stores the deep packet inspection parsing result and the DPI flow identifier locally.

S1706: Packet DPI response. The serving network element sends the DPI parsing result and the DPI flow identifier back to P-GW through a packet DPI response message.

S1707: Perform service control to the user packet according to the DPI parsing result. Here, the P-GW performs bandwidth control to the user packet according to the DPI parsing result.

S1708: Send a DPI request. When the user packet continue to uplink to the third forwarding network element, the third forwarding network element sends the DPI flow identifier to the serving network element, i.e., IP five-tuple.

S1709: Obtain the deep packet inspection parsing result according to the IP five-tuple. Since the deep packet inspection has been performed on the user packet in S1705, the serving network element can obtain the deep packet inspection parsing result by just retrieving according to the IP five-tuple.

S1710: Packet DPI response. The serving network element sends the DPI parsing result and the DPI flow identifier back to the third party forwarding network element through a packet DPI response message.

S 1711: Perform service control to the user packet according to the DPI parsing result. Here, the third party forwarding network element buffers the user packet according to the DPI parsing result of DPI.

It should be noted that, the DPI flow identifier in this application example also can use any combination of domains of the user packet header, such as a source address, a destination address, a source port, a destination port, a transport layer protocol type, a packet sequence number, a differentiated services code point, an IPv6 flow label as the DPI flow identifier.

In this application example, when the P-GW and the third party forwarding network element send a DPI request to the serving network element, the serving network element successively sends the same DPI parsing result to the P-GW and the third party forwarding network element, to achieve sharing of the DPI parsing result in the P-GW and the third party forwarding network element.

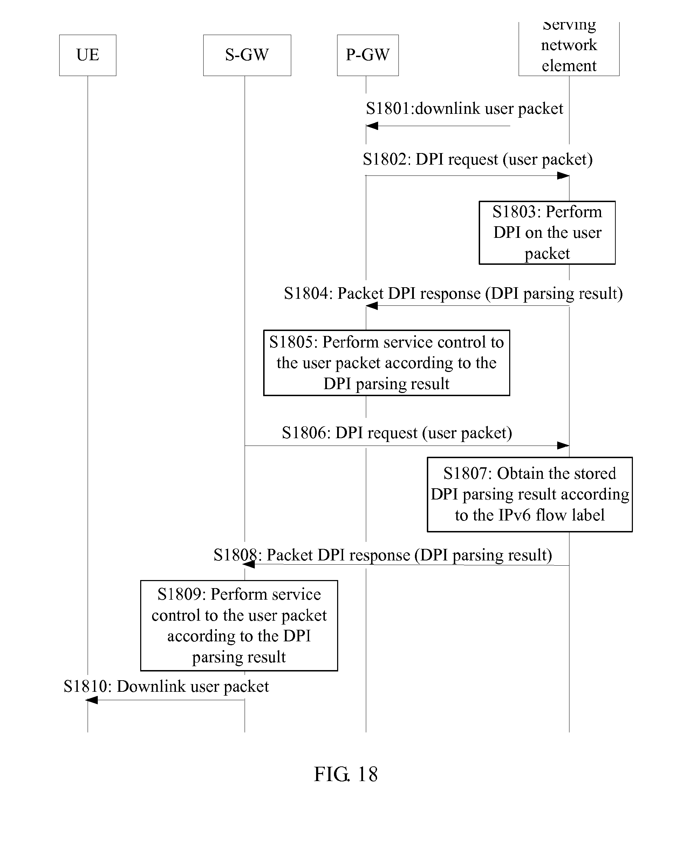

Refer to FIG. 18, description will be made in detail below with reference to 3GPP EPS (The 3rd Generation Partnership Project Evolved Packet System) mobile network in the following. This application example focuses on an interaction among a user terminal, a forwarding network element and a serving network element, the contents of 3GPP EPS mobile network is incorporated herein by reference in its entirety, and meanwhile, this application example is also combined with the method for sharing/acquiring a deep packet inspection parsing result using a flow identifier. The S-PW and the P-GW in the 3GPP EPS mobile network are forwarding network elements.

S1801: The P-GW receives a downlink user packet sent by an external network to the UE.

S1802: DPI request. The P-GW sends the received user packet to the serving network element. In particular, the DPI request can be considered, by convention, to be presented when the serving network element receives the user packet.

S1803: Perform DPI on the user packet. After receiving the DPI request, the serving network element extracts the DPI flow identifier, i.e., IPv6 flow label, from the user packet; upon inspection, there is no corresponding DPI flow identifier, then parsing and calculation are performed on the user packet, so as to obtain the deep packet inspection parsing result. Hereafter, the serving network element stores the deep packet inspection parsing result and the DPI flow identifier locally.

S1804: Packet DPI response. The serving network element sends the DPI parsing result and the DPI flow identifier back to the P-GW through a packet DPI response message.

S1805: Perform service control to the user packet according to the DPI parsing result. Here, the P-GW performs accounting control to the user packet according to the DPI parsing result.

S1806: Send a DPI request. When the user packet continues to be downlink sent to the S-GW, the S-GW sends to the serving network element a DPI request, the user packet and the DPI flow identifier corresponding to the user packet. In particular, the DPI request can be considered by convention to be presented when the serving network element receives the user packet.

S1807: Obtain the deep packet inspection parsing result according to the IPv6 flow label. Since the deep packet inspection has been performed on the user packet in S1803, the serving network element can obtain the deep packet inspection parsing result by just retrieving according to the IPv6 flow label.

S1808: Packet DPI response. The serving network element sends the DPI parsing result and the DPI flow identifier back to the S-GW through a packet DPI response message.

S1809: Perform service control to the user packet according to the DPI parsing result. Here, the S-GW performs service quality control to the user packet according to the DPI parsing result.

It should be noted that, the DPI flow identifier in this application example also can use any combination of domains of the user packet header, such as a source address, a destination address, a source port, a destination port, a transport layer protocol type, a packet sequence number, a differentiated services code point, an IPv6 flow label as the DPI flow identifier.

In this application example, when the P-GW and the S-GW send a DPI request to the serving network element, the serving network element successively sends the same parsing result of DPI to the P-GW and the S-GW, to achieve sharing of the DPI parsing result in the P-GW and the S-GW.

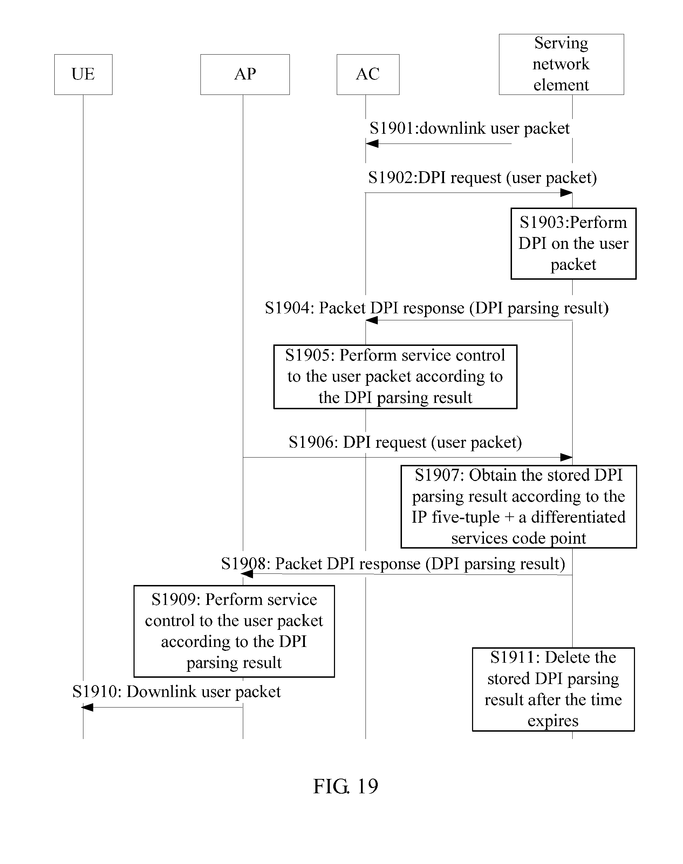

Refer to FIG. 19, description will be made in detail with reference to accessing fixed network through a wireless local area network (WLAN, Wireless Local Area Networks) in the following. This application example focuses on an interaction among a user terminal, a forwarding network element and a serving network element, and meanwhile, this application example is also combined with the method for sharing/acquiring a deep packet inspection parsing result using a flow identifier. The access point (AP, access point) and the access controller (AC, Access Controller) are forwarding network elements.

S1901: The AC receives a downlink user packet sent by an external network to the UE.

S1902: DPI request. The AC sends the received user packet to the serving network element. In particular, the DPI request can be considered by convention to be presented when the serving network element receives the user packet.

S1903: Perform DPI on the user packet. After receiving the DPI request, the serving network element extracts the DPI flow identifier, i.e., IP five-tuple + a differentiated services code point, from the user packet; upon inspection, there is no corresponding DPI flow identifier, then parsing and calculation are performed on the user packet, so as to obtain the deep packet inspection parsing result. Hereafter, the serving network element stores the deep packet inspection parsing result and the DPI flow identifier locally, and meanwhile records the time of storing.

S1904: Packet DPI response. The serving network element sends the DPI parsing result and the DPI flow identifier back to the AC through a packet DPI response message.

S1905: Perform service control to the user packet according to the DPI parsing result. Here, the AC performs accounting control to the user packet according to the DPI parsing result.

S1906: Send the DPI request. When the user packet continues to be downlink sent to the AP, the AP sends to the serving network element a DPI request, the user packet and the DPI flow identifier corresponding to the user packet. In particular, the DPI request can be considered by convention to be presented when the serving network element receives the user packet.

S1907: Obtain the deep packet inspection parsing result according to the IP five-tuple + a differentiated services code point. Since the deep packet inspection has been performed on the user packet in S1903, the serving network element can obtain the deep packet inspection parsing result by just retrieving according to the IP five-tuple + a differentiated services code point. Then, the serving network element records the time when the DPI parsing result is accessed.

S1908: Packet DPI response. The serving network element sends the DPI parsing result and the DPI flow identifier back to the AP through a packet DPI response message.

S1909: Perform service control to the user packet according to the DPI parsing result. Here, the AP performs service quality control to the user packet according to the DPI parsing result.

S1910: Delete the stored DPI parsing result after the time expires. The serving network element calculates whether the time expires through the time of storing in S1903 or the time when the DPI parsing result is accessed in S1907, if no, keep the DPI parsing result, and if yes, delete the DPI parsing result.

It should be noted that, the DPI flow identifier in this application example also can use any combination of domains of the user packet header, such as a source address, a destination address, a source port, a destination port, a transport layer protocol type, a packet sequence number, a differentiated services code point, an IPv6 flow label as the DPI flow identifier.

In this application example, when the AP and the AC send a DPI request to the serving network element, the serving network element successively sends the same DPI parsing result to the AP and the AC, to achieve sharing of the DPI parsing result of the DPI in the AP and the AC.

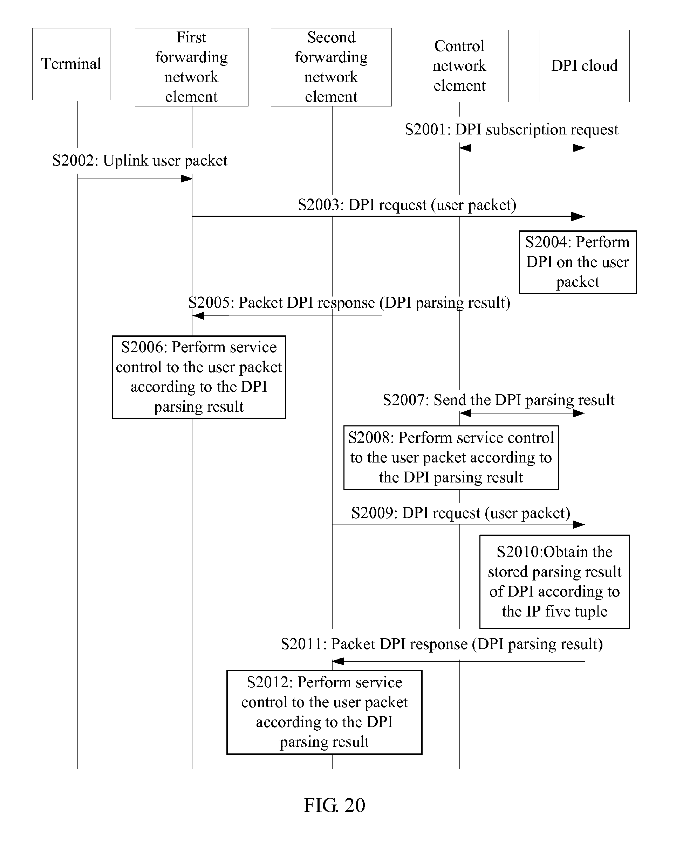

Refer to FIG. 20, description will be made in detail with reference to a universal network in the following. This application example focuses on an interaction among a user terminal, a forwarding network element and a serving network element, and meanwhile, this application example is also combined with the method for sharing/acquiring a deep packet inspection parsing result using a subscription condition and a flow identifier. A control network element, together with a first forwarding network element and a second forwarding network element are forwarding network elements.

S2001: When a user packet has not yet been transmitted, the control network element presents a deep packet inspection subscription request to a DPI cloud,. Where the deep packet inspection subscription request includes a subscription condition, and the subscription condition is a multimedia message protocol type in this embodiment. The serving network element feeds a response message back to the control network element after receiving the deep packet inspection subscription request. Here, the control network element can be an accounting network element or a strategy control network element.

S2002: The user terminal sends an uplink multimedia message packet to the first forwarding network element.

S2003: DPI request. The first forwarding network element sends the received user packet to the DPI cloud. In particular, the DPI request can be considered by convention to be presented when the DPI cloud receives the user packet.

S2004: Perform DPI on the user packet. After receiving the DPI request, the DPI cloud extracts the DPI flow identifier, i.e., IP five-tuple, from the user packet; upon inspection, there is no corresponding DPI flow identifier, then parsing and calculation are performed on the user packet, so as to obtain the deep packet inspection parsing result,. Hereafter, the serving network element stores the deep packet inspection parsing result and the DPI flow identifier locally. Meanwhile, the serving network element determines whether the subscription condition of the control network element is satisfied by inspecting the subscription condition of the control network element, i.e. the multimedia message protocol type, and the serving network element also can extract characteristic information, i.e., IP five-tuple, from the user packet or the deep packet inspection parsing result, to obtain a packet identification template.

S2005: The serving network element sends the DPI parsing result and the DPI flow identifier back to the control network element through a packet DPI response message.

S2006: The first forwarding network element performs gate control to the user packet according to the DPI parsing result, that is, determines whether the user packet can enter the network.

S2007: After determining the subscription condition of the control network element is satisfied, the DPI cloud sends both the deep packet inspection parsing result and the packet identification template to the control network element.

S2008: The control network element performs service accounting to the user packet according to the DPI parsing result.

S2009: When the user packet is uplink sent to the second forwarding network element, the second forwarding network element sends to the DPI cloud a DPI request, the user packet and the DPI flow identifier corresponding to the user packet. In particular, the DPI request can be considered by convention to be presented when the serving network element receives the user packet.

S2010: Obtain the deep packet inspection parsing result according to the IP five-tuple. Since the deep packet inspection has been performed on the user packet in S2004, the serving network element can obtain the deep packet inspection parsing result by just retrieving according to the IP five-tuple.

S2011: Packet DPI response. The serving network element sends the DPI parsing result and the DPI flow identifier back to the second forwarding network element through a packet DPI response message.

S2012: Perform bandwidth control to the user packet according to the DPI parsing result.

It should be noted that, the subscription condition in this application example also can use any combination of application layer keywords such as an HTTP request type, an FTP file name, an application layer protocol, and a DSN domain name as the subscription condition.

This application example is combined with the method using the subscription condition and the flow identifier, to achieve sharing of the DPI parsing result.

Understandably, in the embodiments provided herein, the disclosed systems, devices and methods may be implemented in other modes. For example, the device embodiments described above are only illustrative in nature, and the division of modules or units is a division from the perspective of logical functions only and may be defined in a different way in practical application. For example, multiple units or components may be combined or integrated into another system, or some features may be ignored or not executed. Besides, the coupling, direct coupling or communication connection illustrated or discussed herein may be implemented through indirect coupling or communication connection through interfaces, devices or units, and may be electronic, mechanical, or in other forms.

The units described as stand-alone components above may be separated physically or not; and the components illustrated as units may be physical units or not, namely, they may be located in one place, or distributed on multiple network elements. Some or all of the units described above may be selected as required to fulfill the objectives of the technical solutions of the present embodiments.

Besides, all functional units in the embodiments of the present application may be physically stand-alone, or integrated into a processing module, or two or more than two units are integrated into one unit. The above integrated unit may be implemented by hardware or by a software function unit.

If being implemented as a software function unit and sold or used as a stand-alone product, the integrated unit may be stored in a computer-readable storage medium. Based on this understanding, the essence of the technical solution of the present application, or a part making contribution to the prior art, or all or part of the technical solution, may be embodied in a software product. The computer software product may be stored in a computer-readable storage medium and incorporates several instructions for instructing a computer device (for example, personal computer, server, or network device), or processor to execute all or part of the steps of the method specified in any embodiment of the present application. The aforementioned storage medium includes a USB flash disk, a mobile hard disk, a read-only memory (ROM, Read-Only Memory), a random access memory (RAM, Random Access Memory), a magnetic disk, or an optical disk.

Finally, it should be noted that the above embodiments are merely provided for describing the technical solutions of the present application, but not intended to limit the present application. It should be understood by persons skilled in the art that although the present application has been described in detail with reference to the foregoing embodiments, modifications can be made to the technical solutions described in the foregoing embodiments, or equivalent replacements can be made to some technical features in the technical solutions; however, such modifications or replacements do not cause the essence of corresponding technical solutions to depart from the spirit and scope of the embodiments of the present application.

## Claims

1. A method for sharing a deep packet inspection parsing result, comprising the following steps:
receiving, by a serving network element, a user packet;
performing deep packet inspection on the user packet, to obtain the deep packet inspection parsing result; and
sending, to a forwarding network element which sends a request, the deep packet inspection parsing result, to achieve sharing of the deep packet inspection parsing result.

2. The method according to claim 1, wherein the request is a deep packet inspection subscription request, and the step of sending, to the forwarding network element which sends the request, the deep packet inspection parsing result, comprises:
inspecting whether a subscription condition of the forwarding network element is satisfied by information carried by the user packet or the deep packet inspection parsing result, wherein the subscription condition is included in the deep packet inspection subscription request; and
if the subscription condition of the forwarding network element is satisfied, sending, to the forwarding network element whose subscription condition is satisfied, the deep packet inspection parsing result,.

3. The method according to claim 2, wherein the subscription condition comprises at least one of a data link layer identification, network layer information, transport layer information, application layer information and a packet feature.

4. The method according to claim 2, wherein
after the step of receiving, by the serving network element, the user packet, and before the step of sending, to the forwarding network element which sends the deep packet inspection subscription request, the deep packet inspection parsing result, the method comprises: extracting characteristic information from the user packet or the deep packet inspection parsing result to form a packet identification template;
the step of sending, to the forwarding network element which sends the deep packet inspection subscription request, the deep packet inspection parsing result specifically is: sending, to the forwarding network element which sends the deep packet inspection subscription request, the deep packet inspection parsing result and the packet identification template, for the forwarding network element to obtain, from a data flow, a user packet matching the packet identification template and achieve service control to the user packet.

5. The method according to claim 4, before the step of extracting the characteristic information from the user packet or the deep packet inspection parsing result to form the packet identification template, the method comprises:
receiving a packet identification template type;
the step of extracting the characteristic information from the user packet or the deep packet inspection parsing result to form the packet identification template comprises: extracting, according to the packet identification template type, corresponding characteristic information from the user packet or the deep packet inspection parsing result to form the packet identification template.

6. The method according to claim 4, wherein the packet identification template comprises at least one of a data link layer identification, network layer information, transport layer information, or a packet feature.

7. The method according to claim 2, wherein the deep packet inspection subscription request is of a user level, of an equipment level or of a service flow level.

8. The method according to claim 1, wherein the request is a deep packet inspection request, before the step of performing deep packet inspection on the user packet, the method comprises:
acquiring a deep packet inspection flow identifier formed by characteristic information corresponding to the user packet;
the step of performing the deep packet inspection on the user packet, to obtain the deep packet inspection parsing result comprises:
inspecting whether there is a deep packet inspection parsing result corresponding to the deep packet inspection flow identifier;
if no, performing the deep packet inspection on the user packet, to obtain and store the deep packet inspection parsing result.

9. The method according to claim 8, wherein the step of acquiring the deep packet inspection flow identifier formed by the characteristic information corresponding to the user packet specifically is:
extracting, from the user packet, or receiving, from the forwarding network element, the deep packet inspection flow identifier formed by the characteristic information corresponding to the user packet.

10. The method according to claim 8, before the step of extracting, from the user packet, the deep packet inspection flow identifier corresponding to the user packet, the method comprises:
receiving a deep packet inspection flow identifier type;
the step of extracting, from the user packet, the characteristic information corresponding to the user packet to form the deep packet inspection flow identifier comprises: extracting, according to the deep packet inspection flow identifier type, from the user packet, the characteristic information corresponding to the user packet to form the deep packet inspection flow identifier.

11. The method according to any one of claims 1 to 10, wherein the method comprises:
if a storage time or an access time of the deep packet inspection parsing result is larger than a threshold time, deleting, by the serving network element, the deep packet inspection parsing result.

12. The method according to any one of claims 1 to 11, before the step of receiving, by the serving network element, the user packet, the method comprises: performing deep packet inspection service registration for the forwarding network element, and performing service authorization to a successfully registered forwarding network element.

13. A method for acquiring a deep packet inspection parsing result, comprising the following steps:
sending a request to a serving network element;
receiving a deep packet inspection parsing result, which the serving network element performs inspection on the user packet according to the request and then feeds back.

14. The method according to claim 13, wherein the request is a deep packet inspection subscription request, and the step of sending the request to the serving network element specifically is: sending to the serving network element the deep packet inspection subscription request carrying a subscription condition.

15. The method according to claim 14, wherein the subscription condition comprises at least one of a data link layer identification, network layer information, transport layer information, application layer information or a packet feature.

16. The method according to claim 14, wherein
before the step of receiving the deep packet inspection parsing result which the serving network element performs inspection on the user packet according to the request and then feeds back, the method comprises: receiving a packet identification template extracted by the serving network element from the user packet or the deep packet inspection parsing result;
after the step of receiving the deep packet inspection parsing result which the serving network element performs inspection on the user packet according to the request and then feeds back, the method comprises: obtaining, according to the packet identification template, from a data flow, a user packet matching the packet identification template, to achieve service control to the user packet.

17. The method according to claim 16, wherein before the step of receiving a packet identification template extracted by the serving network element from the user packet or the deep packet inspection parsing result, the method comprises:
sending, to the serving network element, a packet identification template type.

18. The method according to claim 16, wherein the packet identification template comprises at least one of a data link layer identification, network layer information, transport layer information, or a packet feature.

19. The method according to claim 14, wherein the deep packet inspection subscription request is of a user level, of an equipment level or of a service flow level.

20. The method according to claim 13, wherein before the step of receiving the deep packet inspection parsing result which the serving network element performs inspection on the user packet according to the request and then feeds back, the method comprises:
sending, to the serving network element, a deep packet inspection flow identifier type.

21. The method according to claim 20, wherein after the step of sending, to the serving network element, the deep packet inspection flow identifier type, the method comprises:
sending, to the serving network element, a deep packet inspection flow identifier.

22. The method according to any one of claims 14 to 21, wherein
after the step of receiving the deep packet inspection parsing result which the serving network element performs inspection on the user packet according to the request and then feeds back, the method comprises: performing service control to the user packet according to the deep packet inspection parsing result.

23. The method according to any one of claims 14 to 22, further comprising: sending, to the serving network element, a deep packet inspection service registration request.

24. A serving network element, comprising:
a request receiving module, configured to receive a user packet;
an inspection module, configured to perform deep packet inspection on the user packet, to obtain a deep packet inspection parsing result;
a sending module, configured to send, to a forwarding network element which sends a request, the deep packet inspection parsing result, to achieve sharing of the deep packet inspection parsing result.

25. The serving network element according to claim 24, wherein the request is a deep packet inspection subscription request,
the sending module is further configured to inspect whether a subscription condition of the forwarding network element is satisfied by information carried by the user packet or the deep packet inspection parsing result, and, when the subscription condition of the forwarding network element is satisfied, send, to the forwarding network element whose subscription condition is satisfied, the deep packet inspection parsing result, wherein the subscription condition is included in the deep packet inspection subscription request.

26. The serving network element according to claim 25, wherein the subscription condition comprises at least one of a data link layer identification, network layer information, transport layer information, application layer information and a packet feature.

27. The serving network element according to claim 25, wherein:
the serving network element comprises a template extraction module, configured to extract characteristic information from the user packet or the deep packet inspection parsing result to form a packet identification template;
the sending module is further configured to send, to the forwarding network element which sends the deep packet inspection subscription request, the deep packet inspection parsing result and the packet identification template, for the forwarding network element to obtain, from a data flow, a user packet matching the packet identification template and achieve service control to the user packet.

28. The serving network element according to claim 27, wherein the request receiving module is further configured to receive a packet identification template type; the template extraction module is further configured to extract, according to the packet identification template type, corresponding characteristic information from the user packet or the deep packet inspection parsing result to form the packet identification template.

29. The serving network element according to claim 27, wherein the packet identification template comprises at least one of a data link layer identification, network layer information, transport layer information, or a packet feature.

30. The serving network element according to claim 25, wherein the deep packet inspection subscription request is of a user level, of an equipment level or of a service flow level.

31. The serving network element according to claim 24, wherein the request is a deep packet inspection request,
the serving network element comprises an identification extraction module, configured to acquire a deep packet inspection flow identifier formed by characteristic information corresponding to the user packet;
the inspection module is further configured to inspect whether there is a deep packet inspection parsing result corresponding to the deep packet inspection flow identifier, and, when there is no corresponding deep packet inspection parsing result, perform the deep packet inspection on the user packet, to obtain and store the deep packet inspection parsing result.

32. The serving network element according to claim 31, wherein the identification extraction module is further configured to extract, from the user packet, or receive, from the forwarding network element, the deep packet inspection flow identifier formed by the characteristic information corresponding to the user packet.

33. The serving network element according to claim 31, wherein the request receiving module is further configured to receive a deep packet inspection flow identifier type; the identification extraction module is further configured to extract, according to the deep packet inspection flow identifier type, from the user packet, the characteristic information corresponding to the user packet to form the deep packet inspection flow identifier.

34. The serving network element according to any one of claims 24 to 33, wherein the serving network element comprises:
a deletion module, configured to, when a storage time or an access time of the deep packet inspection parsing result is larger than a threshold time, delete the deep packet inspection parsing result.

35. A forwarding network element, comprising:
a sending module, configured to send a request to a serving network element;
a result receiving module, configured to receive a deep packet inspection parsing result which the serving network element performs inspection on a user packet according to a request and then feeds back.

36. The forwarding network element according to claim 35, wherein the request is a deep packet inspection subscription request, and the sending module is further configured to send, to the serving network element, the deep packet inspection subscription request carrying a subscription condition.

37. The forwarding network element according to claim 36, wherein the subscription condition comprises at least one of a data link layer identification, network layer information, transport layer information, application layer information or a packet feature.

38. The forwarding network element according to claim 36, wherein:
the result receiving module is further configured to receive a packet identification template extracted by the serving network element from the user packet or the deep packet inspection parsing result;
the forwarding network element comprises a template identification module, configured to obtain, according to the packet identification template, from a data flow, a user packet matching the packet identification template, to achieve service control to the user packet.

39. The forwarding network element according to claim 38, wherein:
the sending module is further configured to send, to the serving network element, a packet identification template type.

40. The forwarding network element according to claim 38, wherein the packet identification template comprises at least one of a data link layer identification, network layer information, transport layer information, or a packet feature.

41. The forwarding network element according to claim 36, wherein the deep packet inspection subscription request is of a user level, of an equipment level or of a service flow level.

42. The forwarding network element according to claim 35, wherein the sending module is further configured to send, to the serving network element, a deep packet inspection flow identifier type.

43. The forwarding network element according to claim 42, wherein the sending module is further configured to send, to the serving network element, a deep packet inspection flow identifier.

44. The forwarding network element according to any one of claims 35 to 43, wherein
the forwarding network element comprises a service control module, and the service control module is configured to perform service control to the user packet according to the deep packet inspection parsing result.

45. The forwarding network element according to any one of claims 35 to 44, wherein the sending module is further configured to send, to the serving network element, a deep packet inspection service registration request.

46. A system for sharing a deep packet inspection parsing result, comprising at least one serving network element and a plurality of forwarding network elements, wherein a data transmission channel is established between the serving network element and each of the forwarding network elements, and the serving network element is a serving network element according to any one of claims 24 to 34.

47. The system for sharing a deep packet inspection parsing result according to claim 46, wherein the forwarding network element is a forwarding network element according to any one of claims 35 to 45.
